(19) Europäisches Patentamt European Patent Office Office européen des brevets

(11) **EP 3 859 657 A1**

(12) **EUROPEAN PATENT APPLICATION**
published in accordance with Art. 153(4) EPC

(43) Date of publication:
**04.08.2021 Bulletin 2021/31**

(21) Application number: **19867753.6**

(22) Date of filing: **30.08.2019**

(51) Int Cl.:
*G06T 5/00* (2006.01)    *G06T 7/11* (2017.01)
*G09G 5/02* (2006.01)    *H04N 7/18* (2006.01)

(86) International application number:
**PCT/JP2019/034079**

(87) International publication number:
**WO 2020/066456 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2018 JP 2018178382**

(71) Applicant: **Sony Group Corporation**
**Tokyo 108-0075 (JP)**

(72) Inventors:
• **MORIUCHI, Yusuke**
**Tokyo 108-0075 (JP)**
• **ITO, Atsushi**
**Tokyo 108-0075 (JP)**

(74) Representative: **D Young & Co LLP**
**120 Holborn**
**London EC1N 2DY (GB)**

(54) **IMAGE PROCESSING DEVICE, IMAGE PROCESSING METHOD, AND PROGRAM**

(57)    An image processing apparatus and an image processing method that make it possible to generate a high-quality correction image in which luminance unevenness and color unevenness are reduced are implemented. The image processing apparatus includes a sampling point selection section that selects sampling points to be utilized for calculation of a correction function to be applied to pixel value correction of an image from within the image, a correction function calculation section that applies a pixel value and positional information of each of the sampling points to calculate the correction function, and an image correction section that applies the correction function to perform pixel value correction of the image. The sampling point selection section executes clustering (cluster division) for dividing component pixels of the image into a plurality of subsets (clusters), determines a sampling point extraction cluster from among a plurality of clusters generated by the clustering, and executes a process for selecting sampling points from within the sampling point extraction cluster.

F I G . 1

100 IMAGE PROCESSING APPARATUS

EP 3 859 657 A1

**Description**

[Technical Field]

The present disclosure relates to an image processing apparatus, an image processing method, and a program. More specifically, the present disclosure relates to an image processing apparatus, an image processing method, and a program that correct luminance unevenness and so forth of an image to generate a high-picture quality image.

[Background Art]

In recent years, utilization of a drone that is a small flying body that performs flight with remote control or autonomous flight based on GPS or the like increases rapidly.

For example, a drone has a camera mounted thereon and is utilized for a process of capturing an image of a scene of the ground from the sky and so forth.

Further, in recent years, an aerial image captured utilizing a drone is utilized for growth confirmation or management of crops on a farmland, a confirmation process of a terrain, and a surveying process or also at a construction site and so forth.

A drone successively captures images of a predetermined region while moving. If plural captured images are joined to each other, then one image having a wide region can be generated.

However, when the drone moving in the sky captures images, the attitude thereof changes due to the influence of the wind and so forth. As a result, an inputting condition of light from an imaging target to the camera varies and the luminance and the color of the captured images do not become uniform but become sparse. If such images having luminance and colors different from each other as just described are joined to each other to generate one composite image, then the composite image has deteriorated quality in that the continuity at seams of the images is lost.

Further, for example, in such an environment that sparse clouds exist, even in one captured image, portions shaded by the clouds and portions not shaded by the clouds are different in luminance and color.

As described above, in a joining (mosaicking) process in which a plurality of images is captured while changing the capturing position and the capturing direction and are joined to each other to generate a composite image (panorama image), a problem occurs that the luminance value of pixels changes discontinuously in a region corresponding to a seam of the composite image due to a change of the illumination state and so forth of a unit of a captured image.

As a literature that discloses a technology for solving the problem, for example, the following literature is available.

NPL 1 ("Shading and color correction of endoscopic pictures", Masaharu ANDO, Journal of Japan Gastroenterological Endoscopy Society, volume 31, No. 7, p. 1727-1741, 1989.)

In this literature, a signal value correction method using a smoothing filter is disclosed.

In particular, a method is disclosed which utilizes an image obtained by smoothing a captured image or a reference image to divide a signal value of each pixel of the captured image by a signal value of each pixel value of the smoothed image to correct luminance unevenness of the captured image.

However, the correction method disclosed in the literature has a problem that, since luminance change information of an imaging target other than a correction target included in the image also has an influence on the correction image, an error such as a ringing artifact occurs in the corrected image.

Further, a method of correcting a signal value on the basis of a known geometric condition is disclosed in PTL 1 (Japanese Patent Laid-open No. 2004-139219).

This literature discloses a method of calculating a correction function of a secondary function or the like for image correction utilizing illumination of a camera or an image capturing environment and a geometric condition of an imaging target and adjusting a correction amount for brightness or the like of an image utilizing the calculated correction function.

In particular, a luminance change arising from illumination unevenness in the captured image is corrected by performing fitting of a luminance change predicted in advance from a capturing environment with a correction function to perform luminance correction of the captured image.

However, the present method has a problem in that, in the case where it is difficult to calculate an accurate correction function from a geometric condition such as a case in which it is difficult to specify the coordinate or the direction of the illumination or the camera, or a case in which the plane of an imaging target is not a flat plane but is a curved plane having unevenness, or the like, the present method cannot perform high-accuracy correction.

[Citation List]

[Patent Literature]

[PTL 1]
Japanese Patent Laid-open No. 2004-139219

[Non Patent Literature]

[NPL 1]
"Shading and color correction of endoscopic pictures", Masaharu ANDO, Journal of Japan Gastroenterological Endoscopy Society, volume 31, No. 7, p.1727-1741, 1989.

[Summary]

[Technical Problems]

The present disclosure has been made, for example, in view of such a problem as described above, and it is an object of the present disclosure to provide an image processing apparatus, an image processing method, and a program that make it possible, when images whose capturing conditions are different are joined to each other to generate one composite image, to reduce the difference in output pixel value such as luminance between images such that a high-quality composite image can be generated.

For example, in the case where a joining process of joining images captured outdoors from a moving body such as a drone to generate one image, even in an environment in which it is difficult to specify an illumination light condition such as solar light or illumination and a geometric condition such as a camera posture or an uneven state of an imaging target face, a ringing artifact that causes discontinuity at seams of images can be suppressed by appropriate pixel value correction to generate a high-quality composite image in which seams between images are not conspicuous.

Further, it is an object of the present disclosure to provide an image processing apparatus, an image processing method, and a program that make it possible, even in the case where there is a difference in output pixel value such as luminance unevenness within one captured image, to reduce the difference to produce one high-quality image.

[Solution to Problems]

A first aspect of the present disclosure resides in provision of an image processing apparatus including:

a sampling point selection section configured to select sampling points to be utilized for calculation of a correction function to be applied to pixel value correction of an image from within the image;
a correction function calculation section configured to apply a pixel value and positional information of each of the sampling points selected by the sampling point selection section to calculate the correction function; and
an image correction section configured to apply the correction function to perform pixel value correction of the image, in which
the sampling point selection section

executes clustering for dividing component pixels of the image into a plurality of subsets,
determines a sampling point extraction cluster from among a plurality of clusters generated by the clustering, and
executes a process for selecting sampling points from within the sampling point extraction cluster.

Further, a second aspect of the present disclosure resides in provision of an image processing method executed in the image processing apparatus, including:

a sampling point selection step, by a sampling point selection section, of selecting sampling points to be utilized for calculation of a correction function to be applied to pixel value correction of an image from within the image;
a correction function calculation step, by a correction function calculation section, of applying a pixel value and positional information of each of the sampling points selected by the sampling point selection section to calculate the correction function; and
an image correction step, by an image correction section, of applying the correction function to perform pixel value correction of the image, in which
the sampling point selection step includes

a step of executing clustering for dividing component pixels of the image into a plurality of subsets,
a step of determining a sampling point extraction cluster from among a plurality of clusters generated by the clustering, and
a step of selecting sampling points from within the sampling point extraction cluster.

Furthermore, a third aspect of the present disclosure resides in provision of a program for causing an image processing apparatus to execute an image process, the program including:

a sampling point selection step causing a sampling point selection section to select sampling points to be utilized for calculation of a correction function to be applied to pixel value correction of an image from within the image;
a correction function calculation step causing a correction function calculation section to apply a pixel value and positional information of each of the sampling points selected by the sampling point selection section to calculate the correction function; and
an image correction step causing an image correction section to apply the correction function to perform pixel value correction of the image, in which
the sampling point selection step includes

a step of executing clustering for dividing component pixels of the image into a plurality of subsets,
a step of determining a sampling point extraction cluster from among a plurality of clusters generated by the clustering, and
a step of selecting sampling points from within the sampling point extraction cluster.

It is to be noted that the program of the present disclosure is a program capable of being provided by a storage medium or a communication medium that provides the program in a computer-readable form, for example, to an information processing apparatus or a computer system that can execute various program codes. By providing such a program as just described in a computer-readable form, a process according to the program is implemented on the information processing apparatus or the computer system.
Other objects, features, or advantages of the present disclosure will become clear by more detailed description based on the working examples and the attached drawings of the present disclosure hereinafter described. It is to be noted that, in the present specification, the term "system" signifies a logical aggregation configuration of a plurality of apparatuses and is not limited to an apparatus in which devices of the individual configurations are accommodated in the same housing.

[Advantageous Effect of Invention]

With the configuration of the working example of the present disclosure, an image processing apparatus and an image processing method that make it possible to generate a high-quality correction image in which luminance unevenness and color unevenness are reduced are implemented.
In particular, for example, the image processing apparatus includes a sampling point selection section that selects sampling points to be utilized for calculation of a correction function to be applied to pixel value correction of an image from within the image, a correction function calculation section that applies a pixel value and positional information of each of the sampling points to calculate the correction function, and an image correction section that applies the correction function to perform pixel value correction of the image. The sampling point selection section executes clustering (cluster division) for dividing component pixels of the image into a plurality of subsets (clusters), determines a sampling point extraction cluster from among a plurality of clusters generated by the clustering, and executes a process for selecting sampling points from within the sampling point extraction cluster.
With the present configuration, the image processing apparatus and the image processing method capable of generating a high-quality correction image in which luminance unevenness and color unevenness are reduced are implemented.
It is to be noted that the advantageous effect described in the present specification is exemplary to the end and is not restrictive, and an additional effect may be available.

[Brief Description of Drawings]

[FIG. 1]

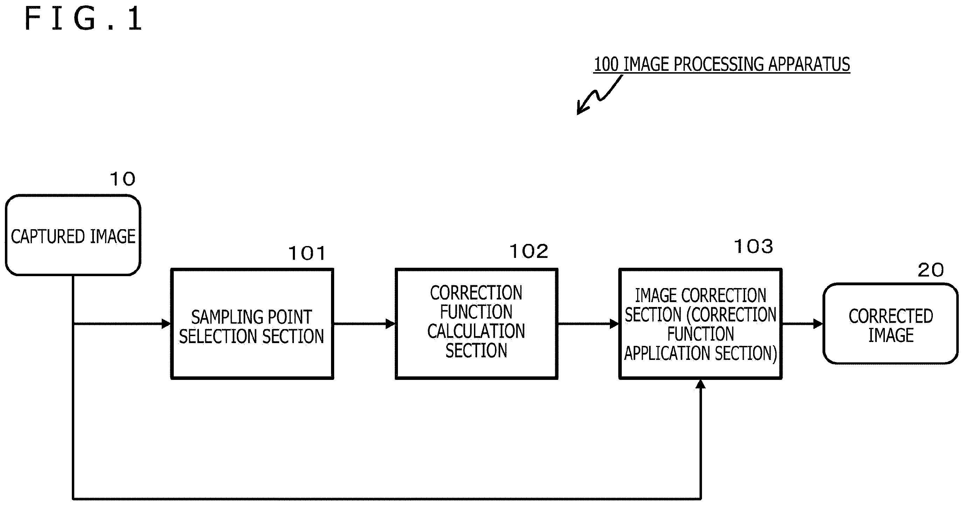

FIG. 1 is a block diagram depicting an example of a configuration of a first working example of the image processing apparatus of the present disclosure.

[FIG. 2]

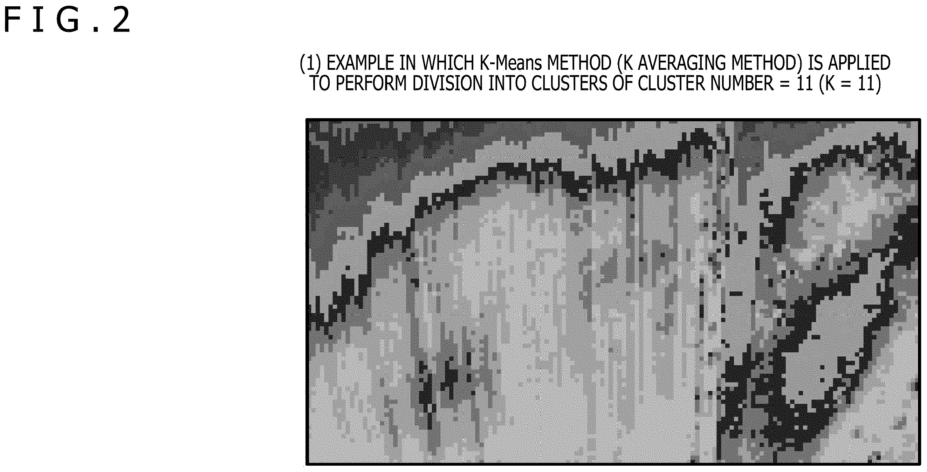

FIG. 2 is a view depicting an example in which a captured image to be a correction target is divided into 11 clusters ($K = 11$) by a K-Means method.

[FIG. 3]

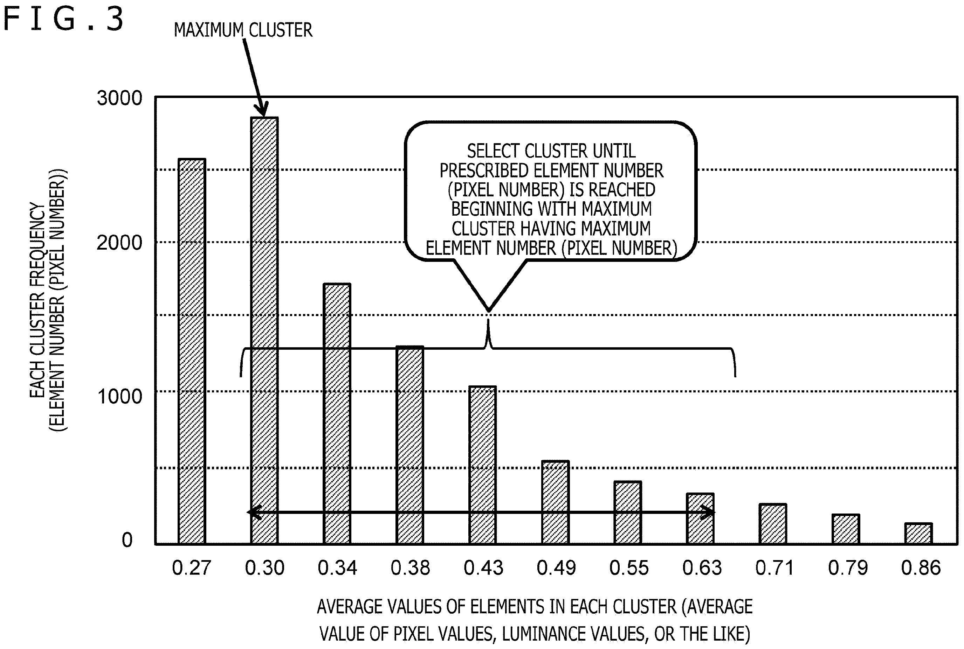

FIG. 3 is a view depicting a histogram that indicates a mean value and a frequency of signal values of elements (pixels) belonging to individual ones of the 11 clusters divided by the K-Means method depicted in FIG. 2.

[FIG. 4]

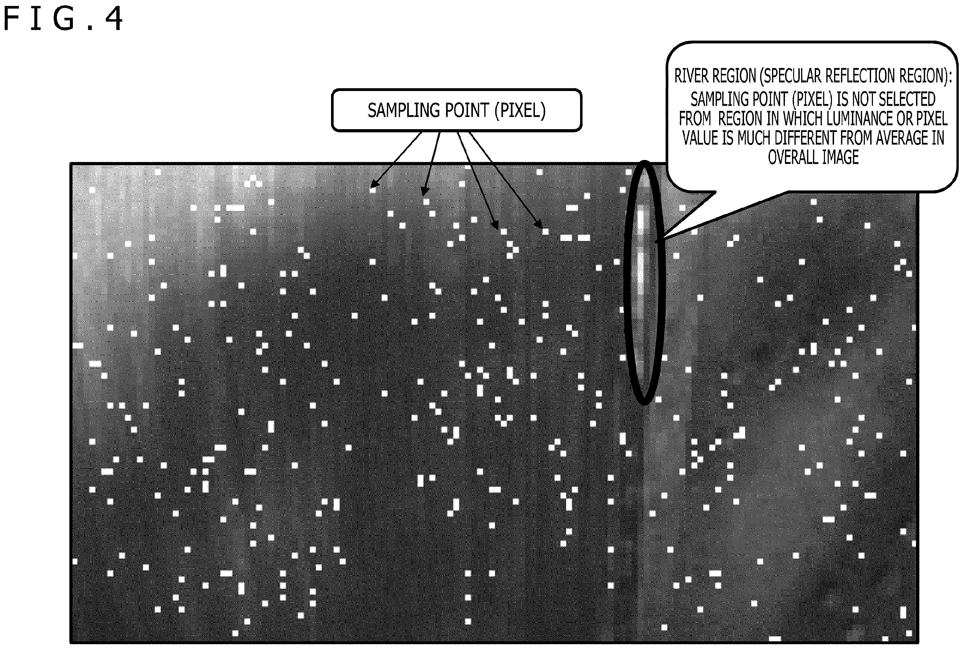

FIG. 4 is a view depicting a result when a sampling point is randomly selected from a sampling point extraction cluster selected utilizing the histogram of FIG. 3.

[FIG. 5]

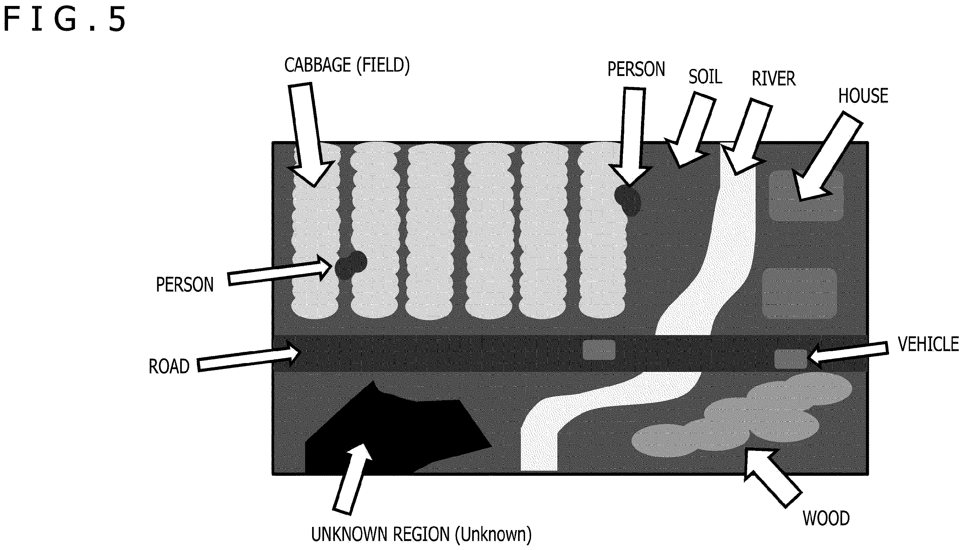

FIG. 5 is a view illustrating an example of a case where a sampling point selection section applies semantic segmentation to perform clustering.

[FIG. 6]

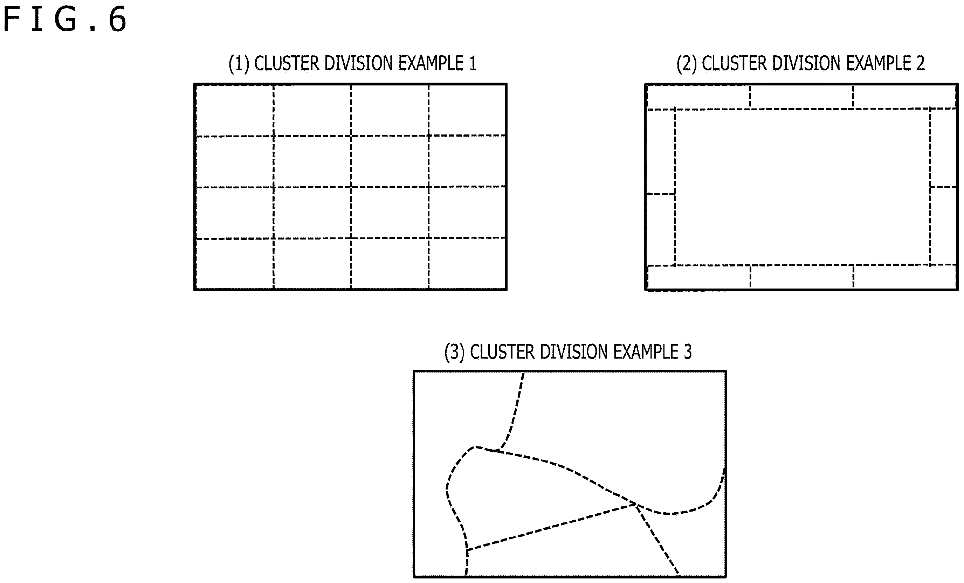

FIG. 6 is a view illustrating an example in which a captured image is divided into a plurality of regions using a boundary set by a user or a boundary defined in advance and such divisional regions are set as clusters.

[FIG. 7]

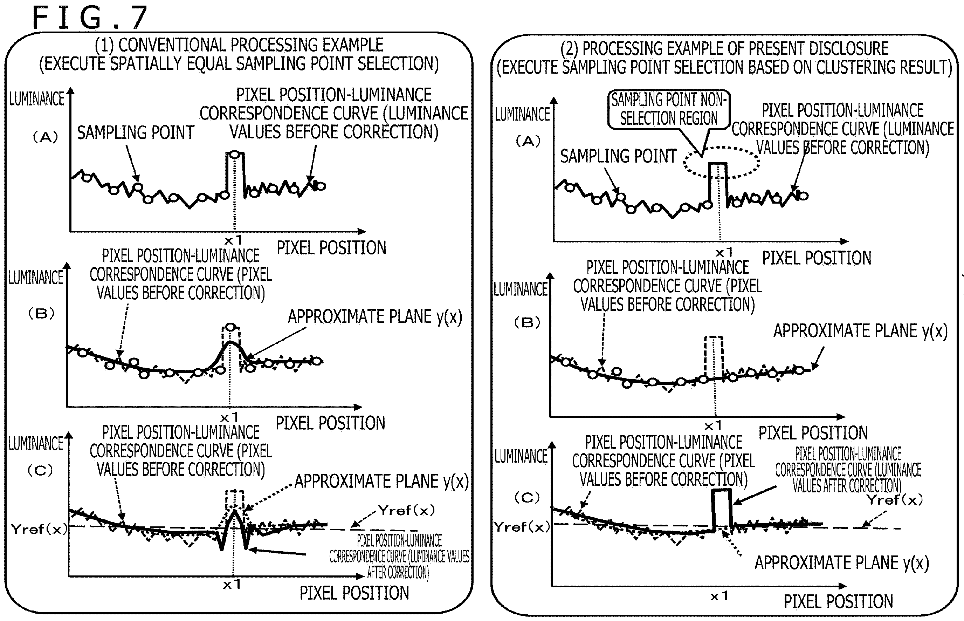

FIG. 7 is a view illustrating a particular difference between examples of image correction by processing by the image processing apparatus of the present disclosure and processing of a conventional type.

[FIG. 8]

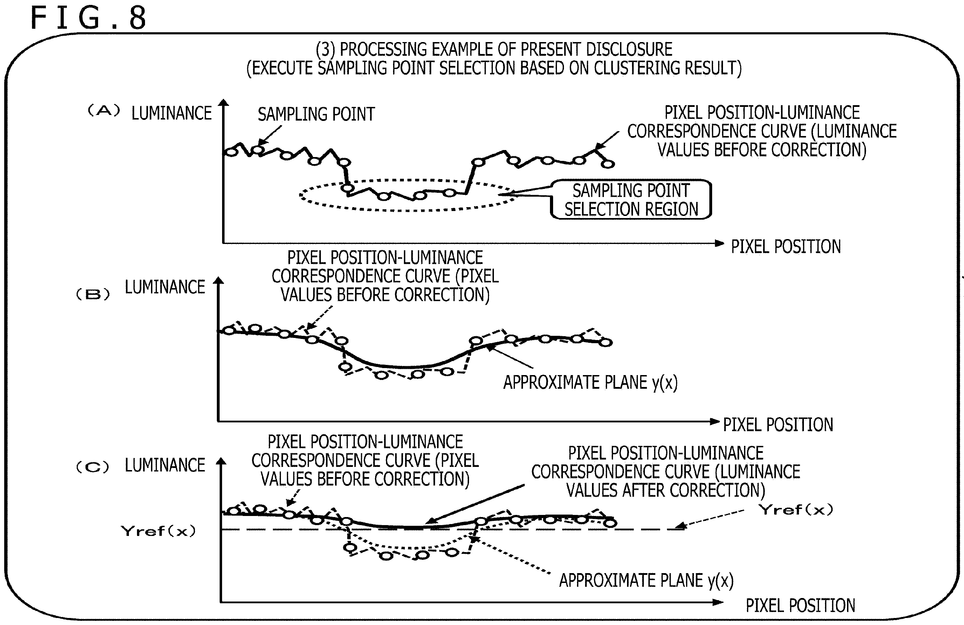

FIG. 8 is a view illustrating processing by the image processing apparatus of the present disclosure.

[FIG. 9]

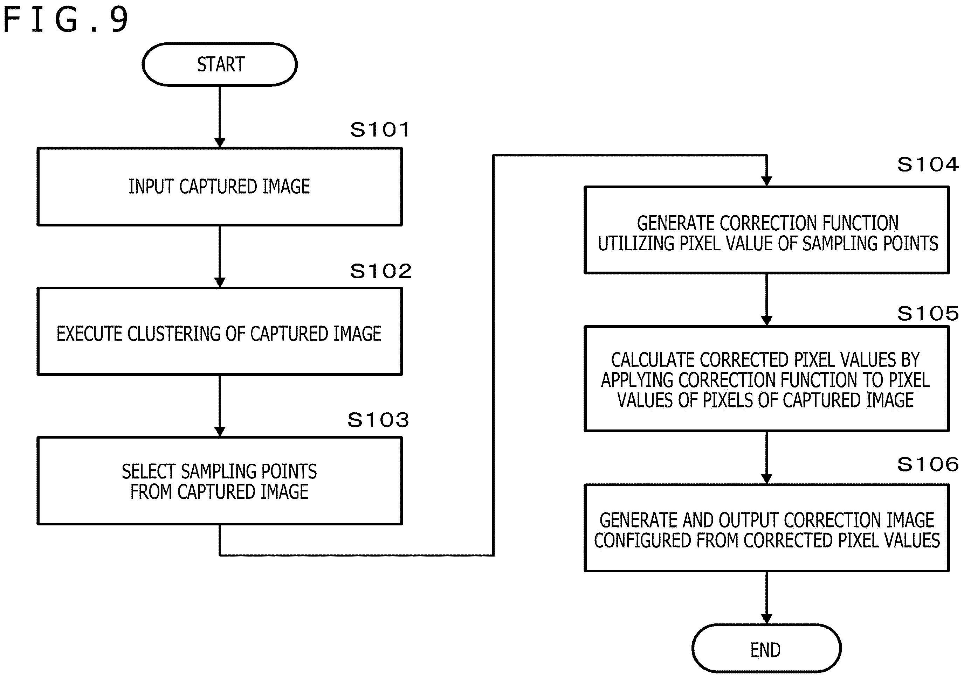

FIG. 9 is a view depicting a flow chart illustrating a sequence of an image process executed by the image processing apparatus depicted in FIG. 1.

[FIG. 10]

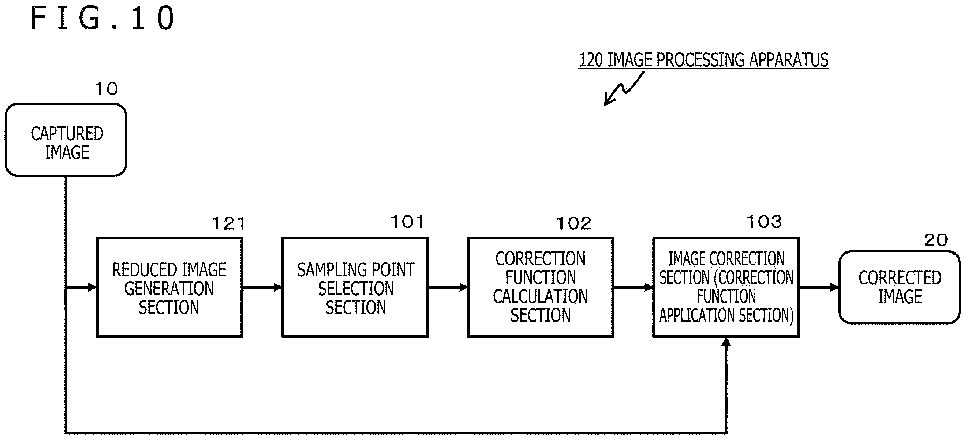

FIG. 10 is a view illustrating a configuration and processing of a second working example of the image processing apparatus of the present disclosure.

[FIG. 11]

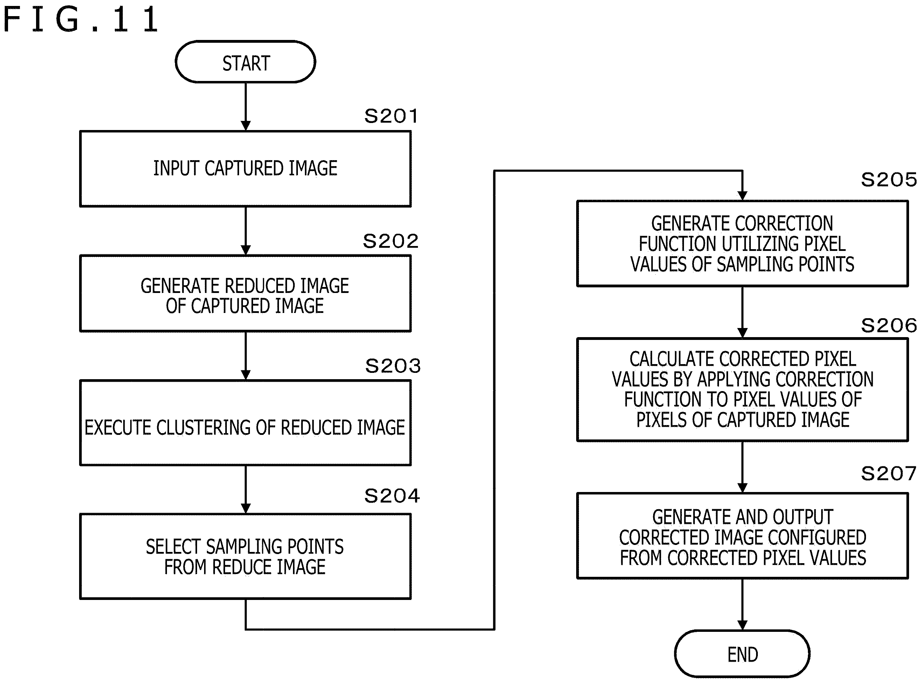

FIG. 11 is a view depicting a flow chart illustrating a sequence of an image process executed by the image processing apparatus depicted in FIG. 10.

[FIG. 12]

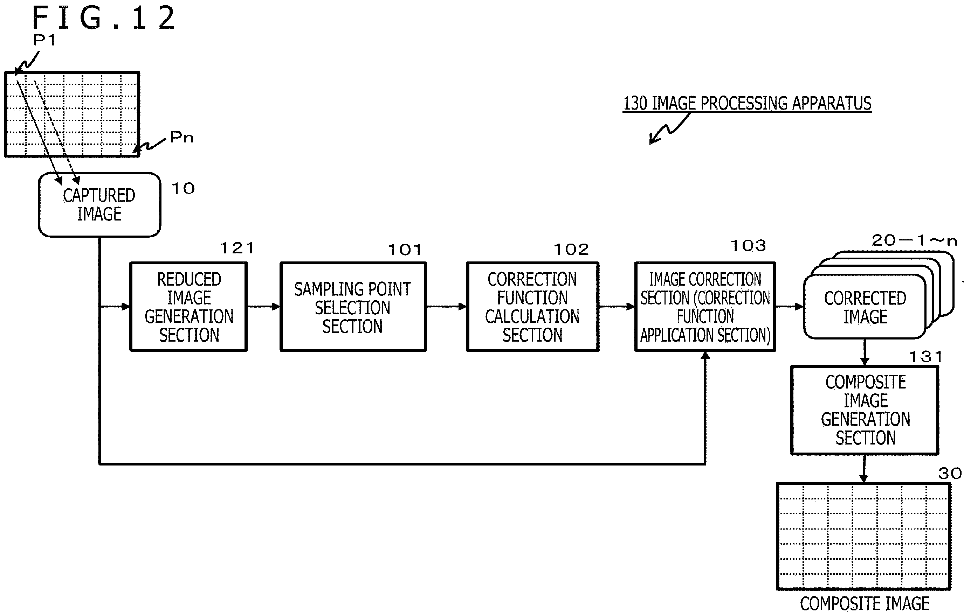

FIG. 12 is a view illustrating a configuration and processing of a third working example of the image processing apparatus of the present disclosure.

[FIG. 13]

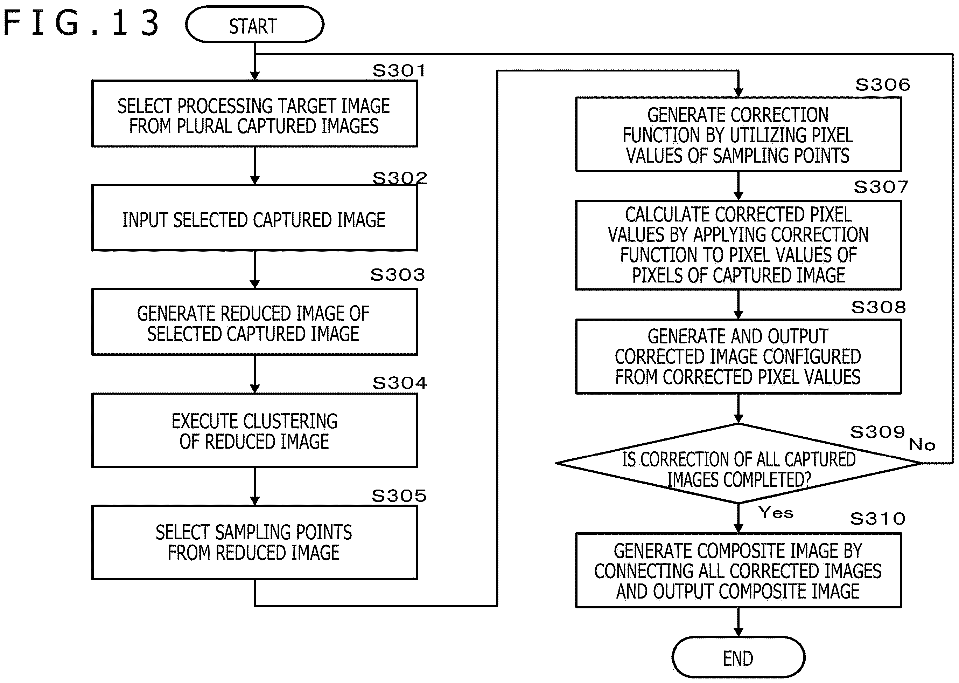

FIG. 13 is a view depicting a flow chart illustrating a sequence of an image process executed by the image processing apparatus depicted in FIG. 12.

[FIG. 14]

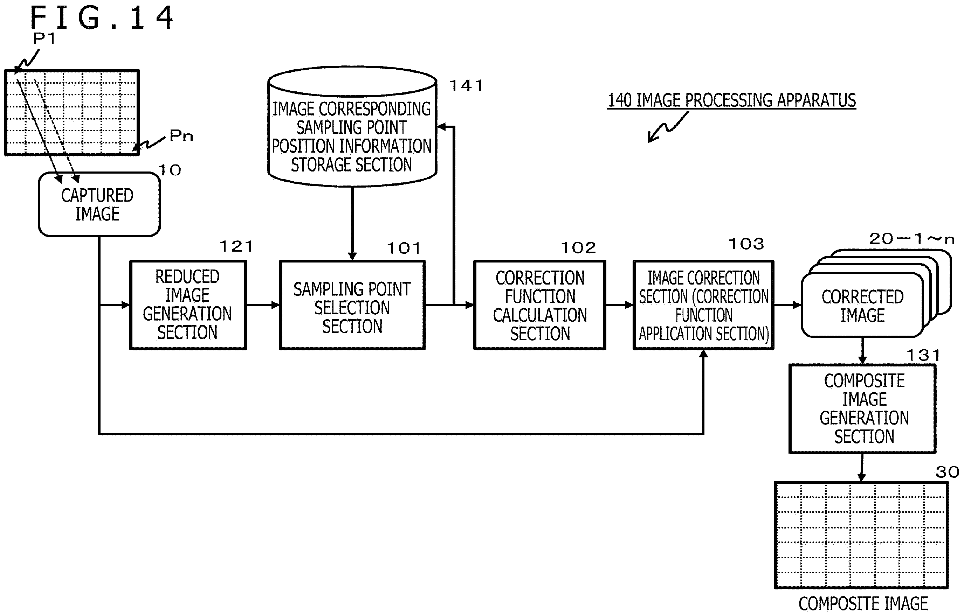

FIG. 14 is a view illustrating a configuration and processing of a fourth working example of the image processing apparatus of the present disclosure.

[FIG. 15]

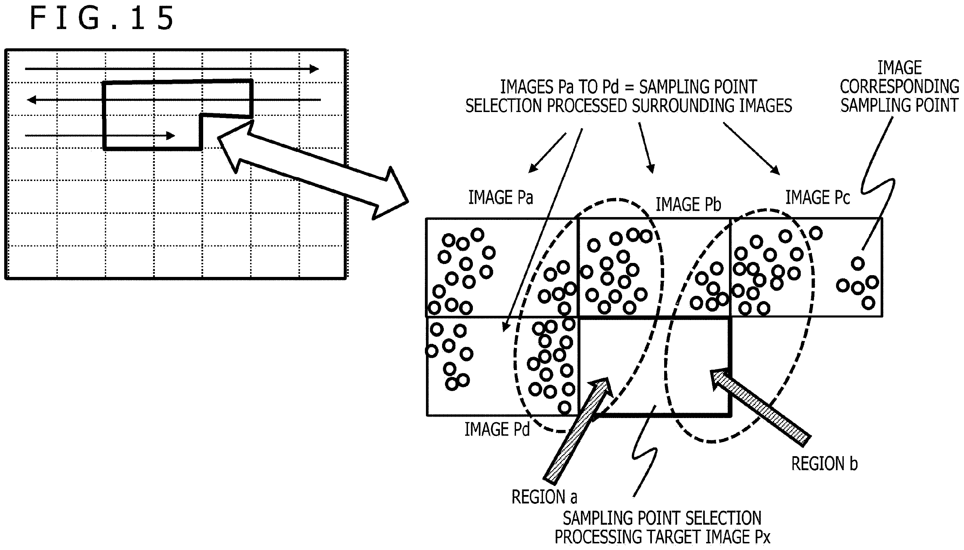

FIG. 15 is a view illustrating processing executed by the fourth working example of the image processing apparatus of the present disclosure.

[FIG. 16]

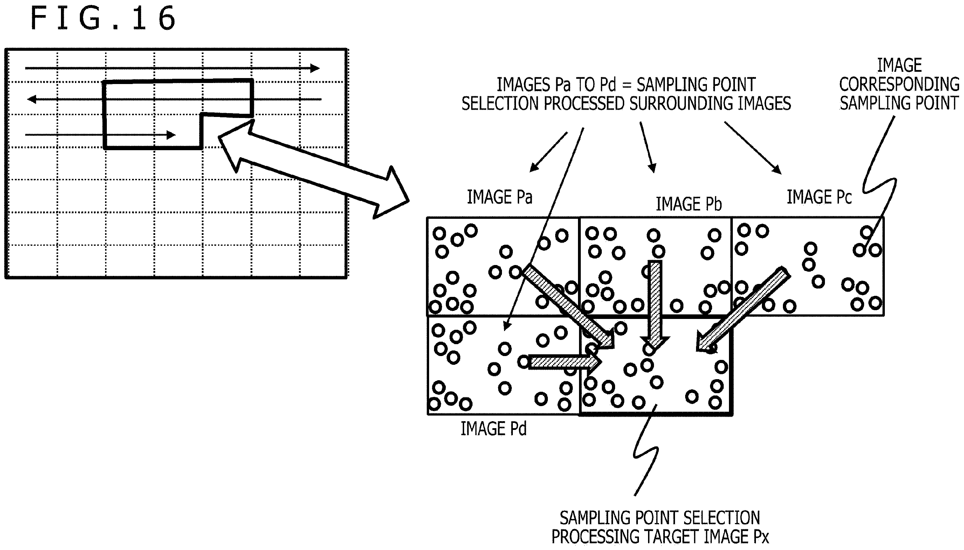

FIG. 16 is a view illustrating processing executed by the fourth working example of the image processing apparatus of the present disclosure.

[FIG. 17]

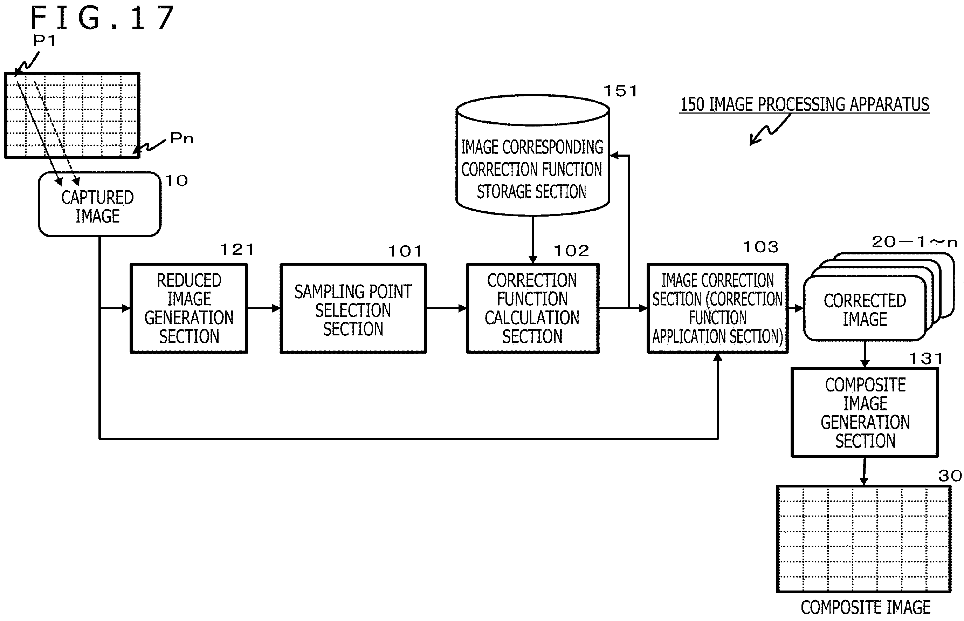

FIG. 17 is a view illustrating a configuration and processing of a fifth working example of the image processing apparatus of the present disclosure.

[FIG. 18]

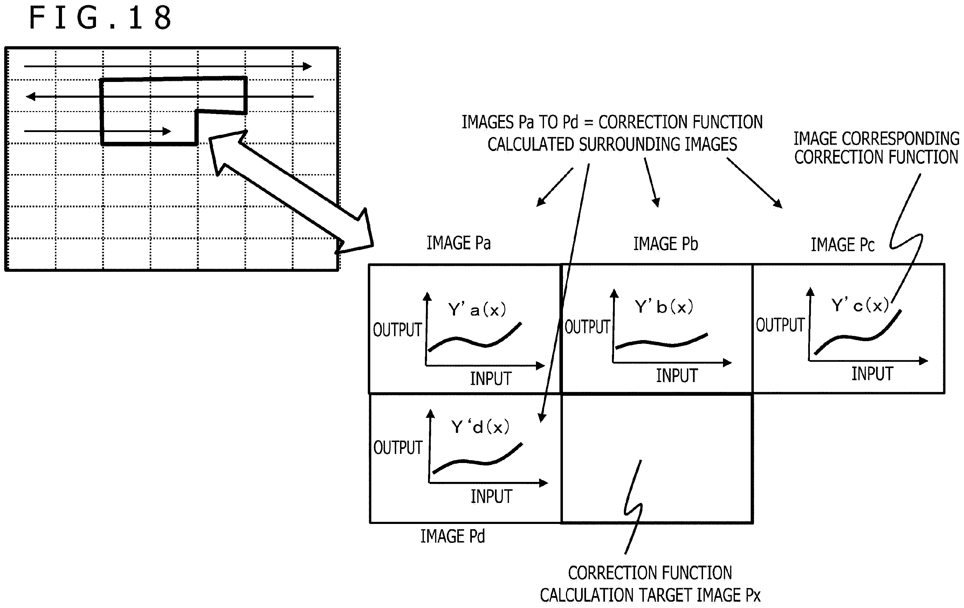

FIG. 18 is a view illustrating processing executed by the fifth working example of the image processing apparatus of the present disclosure.

[FIG. 19]

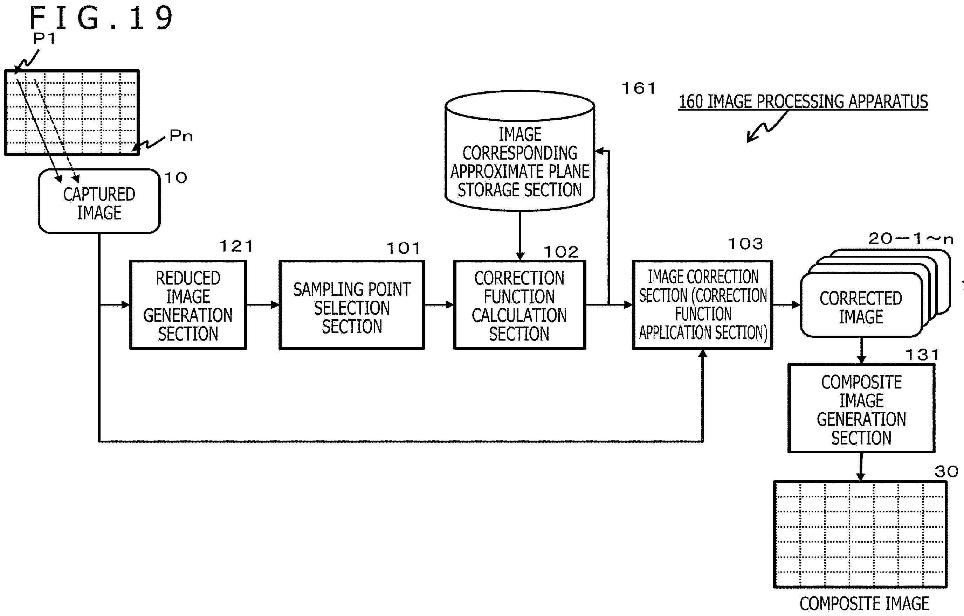

FIG. 19 is a view illustrating a configuration and processing of a sixth working example of the image processing apparatus of the present disclosure.

[FIG. 20]

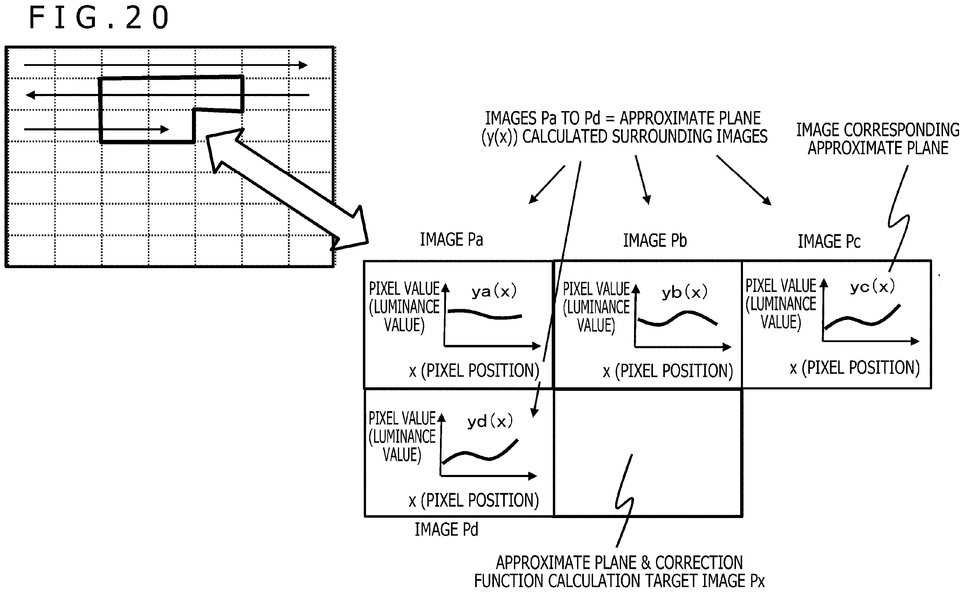

FIG. 20 is a view illustrating processing executed by the sixth working example of the image processing apparatus of the present disclosure.

[FIG. 21]

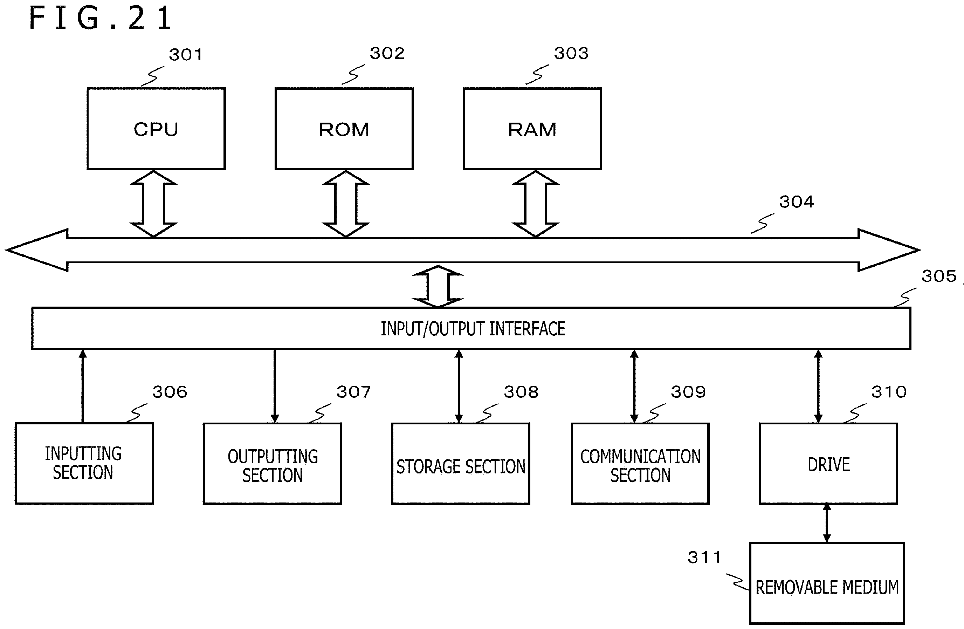

FIG. 21 is a view illustrating an example of a hardware configuration of the image processing apparatus of the present disclosure.

[Description of Embodiments]

In the following, details of an image processing apparatus, an image processing method, and a program of the present disclosure are described with reference to the drawings. It is to be noted that the description is given in the following items.

1. Configuration and Processing of First Working Example of Image Processing Apparatus of Present Disclosure
2. Image Processing Sequence Executed by Image Processing apparatus
3. Configuration and Processing of Second Working Example of Image Processing Apparatus of Present Disclosure
4. Configuration and Processing of Third Working Example of Image Processing Apparatus of Present Disclosure
5. Other Working Examples
6. Example of Hardware Configuration of Image Processing Apparatus
7. Summary of Configuration of Present Disclosure

[1. Configuration and Processing of First Working Example of Image Processing Apparatus of Present Disclosure]

First, a configuration and processing of a first working example of the image processing apparatus of the present disclosure is described with reference to FIG. 1 and the subsequent drawings.

FIG. 1 is a block diagram depicting an example of the configuration of the first working example of the image processing apparatus of the present disclosure. As depicted in FIG. 1, an image processing apparatus 100 includes a sampling point selection section 101, a correction function calculation section 102, and an image correction section (correction function application section) 103.

The image processing apparatus 100 receives one captured image 10 that is a correction target as an input thereto, executes correction and outputs a corrected image 20.

It is to be noted that, in the present working example, the captured image 10 that becomes a correction target is one captured image captured by a single time image capturing process of a camera. In other words, the captured image 10 is not a composite image obtained by performing a joining process of joining a plurality of images to each other.

For example, an image captured by a camera mounted on a moving body such as, for example, a drone sometimes includes a region that becomes and another region that does not become a shadow of a cloud in the sky or some other flying object such as an airplane or a bird. Such regions are different in luminance or color therebetween. In other words, luminance unevenness and color unevenness occur.

The image processing apparatus 100 depicted in FIG. 1 corrects output unevenness of pixel values included in such one captured image 10 to generate a corrected image 20 having reduced luminance unevenness, color unevenness, and so forth.

It is to be noted that the components of the image processing apparatus 100 depicted in FIG. 1 can be configured as individual pieces of hardware or as an integrated piece of hardware. Also, it is possible to execute processes, which are to be executed by the components of the image processing apparatus 100, partly or entirely by software (program).

It is to be noted that, in the following description, an example is described in which the captured image 10 is an RGB color image. However, this is one example, and the image processing apparatus of the present disclosure can perform a correction process not only for RGB images but also for various images such as color images other than RGB color images such as YCbCr images, monochromatic images, and luminance images.

A configuration and processing of the image processing apparatus 100 depicted in FIG. 1 are described.

First, the sampling point selection section 101 of the image processing apparatus 100 depicted in FIG. 1 receives a captured image 10 to be a correction target as an input thereto.

The captured image 10 is one image captured, for example, by a drone.

The sampling point selection section 101 selects pixels to be sampling points from within the captured image 10 of the correction target.

Each sampling point is a pixel that is utilized in order to generate a correction function at the succeeding correction function calculation section 102.

The sampling point selection section 101 outputs the pixel value (luminance value or the like) and position information of the sampling points to the succeeding correction function calculation section 102.

The correction function calculation section 102 generates a correction function utilizing the pixel values and the position information of the sampling points selected by the sampling point selection section 101.

The image correction section (correction function application section) 103 in the last stage applies the correction function generated by the correction function calculation section 102 to all pixels of the captured image 10 to execute pixel value correction of all pixels to generate a corrected image 20.

The sampling point selection section 101 first executes a clustering (cluster division) process of dividing the component pixels of the captured image 10 of the correction target into a plurality of subsets (clusters).

As a method for dividing the component pixels of the captured image 10 into a plurality of subsets (clusters), for example, such existing clustering methods as given below can be applied.

(a) K-Means method,
(b) K-NN method (K-Nearest Neighbor method),
(c) Ward method, and
(d) semantic segmentation

The K-Means method is a clustering method according to a non-hierarchical method and is a method of performing classification using an evaluation function such that an optimum evaluation value is obtained thereby to perform classification into K subsets (clusters).

The K-NN method is a clustering method according to a hierarchical method and is a method of performing sorting in the ascending order of the distance from (in the descending order of the similarity to) a certain reference value or reference pattern to perform classification into K classes.

The Ward method is also a clustering method according to a hierarchical method and is a method of performing classification such that the sum of squares in each cluster is minimized.

The semantic segmentation is a method of performing classification into clusters of individual category units by identifying to which category (person, car, road, plant, or the like) each of component pixels (pixels) of an image belongs on the basis of the degree of coincidence between an object in the image and dictionary data (learned data) for object identification based on shapes and other feature information of actual objects.

It is to be noted that, as the semantic segmentation, for example, such a plurality of different methods as given below is available.

(d1) Method that uses Conditional Random Fields (CRF) (P. Krahenbuhl, et. al, "Efficient Inference in Fully Connected CRFs with Gaussian Edge Potentials", NIPS'11 Proceedings of the 24th International Conference on Neural Information Processing Systems, 2011.)
(d2) Method that utilizes a convolutional neural network (CNN) (G. Lin, et. al, "Efficient Piecewise Training of Deep Structured Models for Semantic", IEEE Conference on Computer Vision and Pattern Recognition (CVPR), 2016.)
(d3) Method that utilizes generative adversarial networks (GAN) (P. Isola, et. al, "Image-to-Image Translation with Conditional Adversarial Networks", IEEE Conference on Computer Vision and Pattern Recognition (CVPR), 2017.)

The sampling point selection section 101 applies, for example, any one of the clustering methods described above, namely,

(a) K-Means method,
(b) K-NN method (K-Nearest Neighbor method),
(c) Ward method, and
(d) semantic segmentation

to execute a clustering (cluster division) method of dividing component pixels of the captured image 10 of the correction target into a plurality of subsets (clusters).

Then, the sampling point selection section 101 selects, from within the divisional clusters, sampling points, namely, sampling points (pixels) to be utilized by the succeeding correction function calculation section 102 to generate a correction function.

The selection process of a sampling point is executed, for example, by the following procedure.

A sampling point extraction cluster is determined from among subsets (clusters) that are plural pixel groups classified by the clustering described above.

Then, pixels included in the determined sampling point extraction cluster are selected as sampling points.

Details of the processes are described in the following.

The sampling point selection section 101 first determines a sampling point extraction cluster from among subsets (clusters) that are plural pixel groups classified by the clustering described above.

As a determination method of a sampling point extraction cluster, for example, any one of the following methods can be applied.

(1) One or more clusters are determined as a sampling point extraction cluster or sampling point extraction clusters in order beginning with a cluster that includes a greatest number of samples (elements/pixels).

(2) A cluster in regard to which a mean value or a median of outputs (pixel values, luminance values, or the like) of pixels is the center of those of all clusters or several clusters adjacent to the cluster are determined as a sampling point extraction cluster or sampling point extraction clusters.

(3) A user selects a specific cluster, and the selected cluster is determined as a sampling point extraction cluster.

The mean value or the median of each cluster indicated in (2) above is, in the present example, a mean value or a median of pixel values or luminance values of pixels belonging to the cluster.

By determining the cluster of the center of the mean values or the medians of the clusters indicated in (2) above or several clusters adjacent to the cluster as a sampling point extraction cluster or sampling point extraction clusters, for example, a cluster that includes an extremely dark pixel region or bright region in an image is not set as a sampling point extraction cluster, and a sampling point is not extracted from the cluster.

Further, as an example of cluster selection by a user in (3) above, there is an example in which a cluster that includes many pixels of a particular imaging target (object) from which pixel values are to be calculated with luminance unevenness or color unevenness reduced.

In particular, in the case where there is a purpose to analyze the growth status of crops on farmland imaged, for example, using a drone, it is possible to select a cluster that includes many pixels in an imaged region of the crops as a sampling point extraction cluster.

On the other hand, in the case where there is a purpose to analyze the soil of farmland imaged using a drone, it is sufficient if a cluster that includes many pixels on which the ground or the crops are reflected is determined as a sampling point extraction cluster.

It is to be noted that, although the number of sampling point extraction clusters to be selected may be one, otherwise two or more clusters may be selected as sampling point extraction clusters.

The pixels in a sampling point extraction cluster selected by the sampling point selection section 101 are set as sampling points (pixels) and are utilized by the correction function calculation section 102 to generate a correction function.

A particular example of a sampling point selection process executed by the sampling point selection section 101 is described with reference to FIG. 2 and the subsequent drawings.

The process described with reference to FIG. 2 and the subsequent drawings is an example of a process in which the K-Means method is applied as the clustering (cluster division) process of dividing component pixels of the captured image 10 that becomes a correction target into a plurality of subsets (clusters).

As described hereinabove, the K-Means method is a clustering method according to a non-hierarchical method and is a method of performing classification using an evaluation function such that an optimum evaluation value is obtained thereby to perform classification into K subsets (clusters).

FIG. 2 is a view depicting an example in which a captured image 10 that becomes a correction target is divided into 11 clusters (K = 11) by the K-Means method.

It is to be noted that, although FIG. 2 depicts the captured image 10 as a shading image, different colors are actually set corresponding to the 11 clusters. Each color corresponds to one of the 11 clusters.

Each cluster includes one or more pixels (elements), and clusters classified in one cluster are pixels similar in feature information (for example, luminance or color) applied to cluster classification.

It is to be noted that, as the feature information of a pixel to be applied to cluster classification, feature information of various features such as "luminance," "color," or any one of R, G, and B values, for example, a pixel value of "G," of a pixel can be utilized.

For example, if the "luminance" is utilized as feature information to be applied to cluster classification, then pixels can be classified into a plurality of clusters in a unit of a set of pixels whose luminance is similar to each other.

On the other hand, for example, if the pixel value of "G" is utilized as feature information to be applied to cluster classification, then pixels can be classified into a plurality of clusters in a unit of a set of pixels whose output values of G are similar to each other.

In this manner, the signal space to be applied as feature information to be applied to cluster classification may use the luminance, color information, or all of the three wavelengths of RGB signals of the captured image 10 or may use an optional wavelength signal or an optional combination of ones of RGB signals. Alternatively, the signal space may use a signal or signals of an image or images obtained by converting the captured image 10 into that of a desired space such as a Lab space, a YUV space, or an xy chromaticity space or a combination of such signals.

FIG. 3 is a histogram that indicates a mean value of signal values of elements (pixels) belonging to each of the eleven clusters into which the pixels are divided by the K-Means method depicted in FIG. 2 and a frequency of the same.

The axis of abscissa indicates a luminance (or pixel value) mean value of in-cluster elements (pixels) of each of the eleven clusters divided by the K-Means method depicted in FIG. 2, and the axis of ordinate indicates a frequency of each cluster, namely, an element number (pixel number) included in each cluster.

The sampling point selection section 101 can perform selection of a sampling point extraction cluster, for example, on the basis of the histogram.

For example, the sampling point selection section 101 selects, as sampling point extraction clusters, a prescribed number of clusters in a direction in which the luminance mean value increases (the rightward direction of the graph of FIG. 3) with reference to a cluster that indicates a maximum frequency among the divisional clusters. Further, the pixels belonging to the selected cluster are sampled at random.

The sampling point selection section 101 performs selection of sampling pixels, for example, by this process.

In the histogram depicted in FIG. 3, the cluster that indicates a maximum frequency is the second cluster from the left, and a number of clusters prescribed in advance, for example, seven clusters, in a direction in which the luminance mean value increases (in the rightward direction of the graph of FIG. 3) with reference to the cluster are selected as sampling point extraction clusters.

Pixels belonging to the seven sampling point extraction clusters selected in this manner are sampled at random.

For example, by selecting a sampling point extraction cluster in this manner, a sampling point (pixel) is not selected from a cluster on the left end or the right end of the histogram. This is a process that does not sample a pixel whose luminance or pixel value is displaced much from a mean value of the entire image, namely, a pixel of a low luminance or a pixel of a high luminance.

By performing such a process as just described, a sampling point can be selected from within a pixel set from which pixels influenced by a shadow, specular reflection, and so forth in an image are removed.

It is to be noted that the selection process of a sampling point extraction cluster utilizing the histogram described hereinabove with reference to FIG. 3 is one example, and the selection process of a sampling point extraction cluster can be performed by various processes such as a process that selection is performed until the number of pixels belonging to the selected cluster exceeds a fixed ratio to the pixel number of the overall image as described hereinabove.

FIG. 4 is a view depicting a result of selection of sampling points at random from within seven sampling point extraction clusters selected in the ascending direction of the luminance mean value with reference to the sampling point extraction cluster selected utilizing the histogram of FIG. 3, namely, with reference to a cluster that indicates a maximum frequency among the eleven clusters.

A white point in the image depicted in FIG. 4 indicates a sampling point (pixel).

On the upper right side of the image depicted in FIG. 4, a river is imaged, and from the surface of the river, reflected light of sun light enters the camera. In other words, the river region is a specular reflection region. Such a specular reflection region is a high luminance region whose luminance is much different from a mean value in luminance of the overall image, and in the present processing example, a sampling pixel is not selected from within such a region as just described.

Similarly, a sampling pixel is not selected also from within a low luminance region whose luminance is much different from a mean value in luminance of the overall image.

In the present processing example, sampling pixels are configured from pixels whose luminance or pixel value is close to a mean value of the overall image and are configured from pixels that do not include low luminance pixels or high luminance pixels whose luminance value is much different from the mean value.

Pixel value information and position information of sampling pixels configured from such average pixel values of an image as described above are outputted to the correction function calculation section 102 depicted in FIG. 1, and the correction function calculation section 102 generates a correction function on the basis of the pixel values and the position information of the sampling pixels.

As described hereinabove, the sampling point selection section 101 outputs pixel values (luminance values or the like) and position information of sampling points to the succeeding correction function calculation section 102.

The correction function calculation section 102 generates a correction function utilizing the pixel values and the position information of the sampling points selected by the sampling point selection section 101.

The correction function calculation section 102 can generate a correction function based on pixel values of sampling pixels configured from average pixel values of an image and can generate a correction function that decreases influences of pixels having extreme luminance or pixel values.

The sampling point selection process described hereinabove with reference to FIGS. 2 to 4 is an example in which the sampling point selection section 101 performs clustering of applying the K-Means method to classify component pixels of an image into K subsets (clusters) and selects sampling points utilizing a result of the clustering.

As described above, the sampling point selection section 101 can apply various clustering methods in addition to the K-Means method.

FIG. 5 depicts an example of a case in which the sampling point selection section 101 performs clustering by applying the semantic segmentation.

As described hereinabove, the semantic segmentation is a method of identifying, on the basis of the degree of coincidence between an object in an image and dictionary data (learned data) for object identification based on shapes and other feature information of various actual objects, to which category (person, car, road, plant, or the like) the object of each component pixel (pixel) of the image belongs and classifying the component pixel into a cluster of each category unit.

As depicted in FIG. 5, by performing the semantic segmentation for the image, such pixel classification (clustering) in an object unit as depicted in FIG. 5 is executed.

In the example depicted in FIG. 5, objects of a cabbage, a person, soil, a river, a house, a tree, a road, a vehicle, and soil are identified. They make individual clusters.

It is to be noted that an unknown region (Unknown) whose object identification cannot be performed sometimes appears in an image.

For example, in the case where a growth situation of cabbages that are crops is an analysis object, it is necessary to accurately acquire information of the color and so forth of the cabbages. To this end, it is required to correct pixel values of the image region in which the cabbages are imaged to pixel values in which luminance unevenness and color unevenness is reduced, namely, to correct the pixel values to pixel values from which influences of a shade of a cloud and so forth are removed.

In the case where such an analysis object exists, an image region in which the cabbages are included is selected as a sampling point extraction cluster, and elements (pixels) in the sampling point extraction cluster are selected as sampling points (pixels).

Pixel value information of the sampling pixels is outputted to the correction function calculation section 102 depicted in FIG. 1, and the correction function calculation section 102 generates a correction function on the basis of the pixel values of the sampling pixels.

The correction function calculation section 102 can create a correction function based on pixel values of sampling pixels selected from the sampling point extraction cluster that is the image region of cabbages and as a result can create a correction function specialized in the image region of cabbages.

By using sampling points selected from a sampling point extraction cluster in this manner, a correction function can be generated to perform a correction process without being influenced by signal values of a tree or a river other than the correction target.

It is to be noted that, to the method for clustering by the sampling point selection section 101, namely, to the method of dividing component pixels of the captured image 10 into a plurality of subsets (clusters), such existing clustering methods as described below can be applied as described hereinabove.

(a) K-Means method,
(b) K-NN method (K-Nearest Neighbor method),
(c) Ward method, and
(d) semantic segmentation

The clustering by the sampling point selection section 101 is not limited to such existing methods, and for example, the captured image 10 may be divided into a plurality of regions using boundaries set by the user or boundaries prescribed in advance such that the divisional regions are set as clusters. A particular example is depicted in FIG. 6.

FIG. 6 depicts the following cluster division examples.

(1) Cluster division example 1: an example of a clustering process in which an image is equally divided into tiles,
(2) Cluster division example 2: an example of a clustering process in which only an end portion of an image is divided into a plurality of regions, and
(3) Cluster division example 3: an example of a clustering process in which an image region is divided using boundaries designated by the user

For example, clustering of such various cluster division examples may be performed.

After the sampling point selection section 101 performs clustering, it determines a sampling point extraction cluster and further selects sampling points from within the determined sampling point extraction cluster.

The sampling point selection process can be executed, for example, as a process of selecting an optional number of pixels at random from the sampling point extraction cluster.

Alternatively, such a method may be performed as dividing a sampling point extraction cluster, which is a sampling point selection target, further into a plurality of regions and selecting sampling points at random from within each region such that the deviation of the selection number among the divisional regions is reduced.

As described hereinabove, the sampling point selection section 101 executes such processes as:

(1) a clustering process of dividing component pixels of the captured image 10 into a plurality of subsets (clusters),
(2) a process of determining a sampling point extraction cluster, which is a sampling point extraction target, from among a plurality of clusters, and

(3) a process of selecting sampling points (pixels) from within the determined sampling point extraction cluster.

Pixel value (luminance values or the like) of the sampling points (pixels) selected by the sampling point selection section 101 is inputted to the correction function calculation section 102 together with position information of the same.

The correction function calculation section 102 uses pixel values and position information of sampling points (pixels) selected by the sampling point selection section 101 to calculate a correction function to be applied to all component pixels of the captured image 10.

The correction function calculation section 102 performs correction curve fitting or the like as a two-dimensional function of image coordinates using any one of existing methods such as, for example, Kernel regression interpolation (Kernel Regression), spline surface interpolation, polynomial approximate curved surface, and linear interpolation to calculate a correction function for correcting pixel values of component pixels of the image.

In the following, as an example of a correction function calculation process to be executed by the correction function calculation section 102, an example in which a correction function is calculated using Kernel regression interpolation (Kernel Regression) is described.

According to the Kernel regression interpolation, data of an observation space d that is a data observation space is projected to a feature space (projection space) D that is a space corresponding to a certain feature different from the observation space d, and an approximate plane corresponding to the data on the feature space (projection space) D, and then an approximate plane (y(x)) on the original observation space d is obtained on the basis of the calculated approximate plane on the projection space. From this approximate plane (y(x)) on the observation space d, approximate solutions of high accuracy corresponding to all x values on the original observation space d can be obtained.

It is to be noted that the observation space d is configured, in the present example, from the positions and the pixel values (luminance values) of sampling points (pixels) selected by the sampling point selection section 101.

The approximate plane (y(x)) that can be calculated by the Kernel regression interpolation described above is a plane that defines approximate solutions (estimation values) of pixel values (luminance values) corresponding to all points including also points other than the sampling points.

The total number of sampling points (pixels) selected by the sampling point selection section 101 is represented by N. The set of pixels of the N sampling points is represented by d.

If x represents the pixel position of each of the N sampling points and t represents a signal value, then the observation space d can be indicated by the following (expression 1).

[Math. 1]

$$d = \{(\mathbf{x}_1, \mathbf{t}_1), \cdots, (\mathbf{x}_N, \mathbf{t}_N)\}$$

...(expression 1)

It is to be noted that the pixel position x is a vector representative of two-dimensional coordinate data (x, y) indicating a pixel position.

The signal value t corresponds to feature information when clustering is performed and is, for example, a luminance value.

(x, t) is a combination of the pixel position x and the signal value t at the pixel position x.

It is to be noted that, if the feature information when clustering is performed is, for example, a signal value of G of RGB, then the signal value t is a signal value of G, and (x, t) is a combination of the pixel position x and the signal value t at the pixel position x.

The correction function calculation section 102 can generate an approximate plane y(x) and a correction function corresponding to feature information applied to clustering.

If the set d of pixels of N sampling points selected by the sampling point selection section 101 is defined as represented by the (expression 1) above, then the approximate plane y(x) (approximate plane calculation function) with respect to the input x can be represented as the following (expression 2).

[Math. 2]

$$y(\mathbf{x}) = \mathbf{k}(\mathbf{x})^{\mathrm{T}}(\mathbf{K} + \lambda \mathbf{I}_{\mathrm{N}})^{-1}\mathbf{t}$$

...(expression 2)

It is to be noted that $\lambda$ in the approximate plane calculation function y(x) indicated by the (expression 2) is a regularization parameter.

Further, K is a Gram matrix and is a matrix indicated by the following (expression 3).

[Math. 3]

$$K := \begin{pmatrix} k(x_1, x_1) & \cdots & k(x_1, x_N) \\ \vdots & \ddots & \vdots \\ k(x_N, x_1) & \cdots & k(x_N, x_N) \end{pmatrix}$$

$$\ldots \text{(expression 3)}$$

Further, k(x) in the (expression 2) is described by the following (expression 4).

[Math. 4]

$$\mathbf{k(x)} := \big( k(x_1, x), \cdots, k(x_N, x) \big)$$

$$\ldots \text{(expression 4)}$$

k(x, x') in the (expression 4) is a Kernel function, and such Kernel functions as a Gaussian Kernel function, a polynomial Kernel function, a full subset Kernel function, and an ANOVA kernel function can be used. In the present example, an example in which the Gaussian Kernel function is used is described.

In the case where the Gaussian Kernel function is used, the Kernel function: k(x, x') in the (expression 4) can be described as the following (expression 5).

[Math. 5]

$$k(\mathbf{x}, \mathbf{x}') := \exp\left(-\frac{\|\mathbf{x} - \mathbf{x}'\|^2}{2\sigma^2}\right)$$

$$\ldots \text{(expression 5)}$$

The correction function calculation section 102 further uses the calculated approximate plane y(x) and applies an (expression 6) given below to generate a correction function for calculating pixel values of pixels after correction.

[Math. 6]

$$Y'(\mathbf{x}) = \frac{Y_{ref}(\mathbf{x})}{y(\mathbf{x})} Y(\mathbf{x})$$

$$\ldots \text{(expression 6)}$$

It is to be noted that, in the correction function indicated by the (expression 6),

Y'(x) is a signal value (pixel value or luminance value) corresponding to the pixel position (x) after correction of the captured image 10,

Y(x) is a signal value (pixel value or luminance value) corresponding to the pixel position (x) before the correction of the captured image 10,

y(x) is an approximate plane y(x) indicated by the (expression 2) given hereinabove, and

Yref(x) is a correction reference prescribed in advance.

As the correction reference Yref(x), for example, a mean value or a median of pixel values of the sampling point extraction cluster or a value selected by the user can be used. The selected value by the user may be a value changed from a value in response to the pixel position.

The (expression 6) is a correction function by which, as the ratio (Yref(x)/y(x)) of two values including an approximate plane y(x) indicated by the (expression 2) given hereinabove and

a correction reference Yref(x) configured from a mean value or a median of pixel values of the sampling point extraction cluster or a value selected by the user

indicates a higher value, the correction value is set greater.

In the case where Yref(x) and y(x) are equal to each other and (Yref(x)/y(x)) = 1 is satisfied, the corrected pixel value Y'(x) calculated according to the (expression 6) becomes equal to the pixel value Y(x) before the correction, and Y'(x) = Y(x) is satisfied.

On the other hand, in the case where the difference between the value of the correction reference Yref(x) and the value of the approximate plane y(x) is great and the ratio of the two values (Yref(x)/y(x)) is high, the correction value for the pixel value Y(x) before the correction is set high.

A particular example of the form of correction is hereinafter described.

The processes executed by the correction function calculation section 102 can be summarized in the following manner.

(1) An approximate plane y(x) that defines an output value (pixel value, a luminance value, or the like) to an input x is calculated.

(2) A correction function (expression 6) for varying the correction amount in response to the ratio between the approximate plane y(x) and the correction reference Yref(x) is calculated.

It is to be noted that, in the present example, "the output value (pixel value, luminance value, or the like) with respect to the input x" is a pixel value or a luminance value corresponding to a pixel position, and the approximate plane y(x) is an approximate plane y(x) that defines a pixel value or a luminance value corresponding to a pixel position.

In this manner, the correction function calculation section 102 calculates a correction function corresponding to a signal value t corresponding to feature information when clustering is performed.

For example, in the case where the feature information when clustering is performed is a luminance value and the signal value t upon generation of the correction function corresponds to a luminance value, a correction function corresponding to the luminance value is calculated.

The correction function corresponding to the luminance value is applied to correction of the luminance value of the captured image 10 to be a correction target. Further, a process for applying the correction function corresponding to the luminance value to correction of luminance values of RGB of each of component pixels of the captured image 10. In this case, all signal values of RGB are corrected.

On the other hand, for example, in the case where the feature information when clustering is performed is G signal values of RGB and the signal value t upon generation of the correction function corresponds to a pixel value of G, it is also possible to perform such a process as to apply the correction function generated on the basis of G pixel values only to the G pixel value of each of the component pixels of the captured image 10 of a correction target.

In this case, only G pixel values among RGB pixel values are corrected.

In this manner, the correction function calculation section 102 may be configured such that it calculates one correction function to be applied to all RGB pixel values of each of component pixels of the captured image 10 or may be configured otherwise such that it calculates three different correction functions individually corresponding to pixel values of three wavelengths of RGB.

The succeeding image correction section (correction function application section) 103 calculates correction pixel values for all component pixels of the captured image 10 according to the correction function (expression 6) calculated by the correction function calculation section 102 and generates a corrected image 20 to which the calculated pixel values are set.

It is to be noted that the correction target basically is all component pixels of the captured image 10. The image correction section (correction function application section) 103 applies the correction function calculated by the correction function calculation section 102 to calculate correction pixel values of all component pixels of the captured image 10 and generates a corrected image 20 to which the calculated pixel values are set.

It is to be noted that it is also possible to determine a particular pixel region or a particular cluster as a correction target by user setting.

A series of processes executed by the component sections of the image processing apparatus 100 depicted in FIG. 1 is described above.

Particular differences between examples of image correction by processes according to the present working example and processes of the conventional type are described with reference to FIG. 7.

FIG. 7 depicts the following two views.

(1) Example of Processing of Conventional Type (example of an image correction process in the case where spatially equal sampling point selection is executed)

(2) An example of processing of the present disclosure (example of processing of image correction in the case where sampling point selection based on a result of clustering is executed)

(1) The example of processing of the conventional type is an example of processing in the case where selection of spatially equal sampling points is performed from within a two-dimensional plane of an image to be a correction target. In particular, the example of processing is an example of processing in the case where sampling points are set at equal distances on an image and an approximate plane y(x) is calculated on the basis of the pixel values of the sampling points and then correction is performed applying the correction function (expression 6) that varies the correction amount in response to the ratio between the approximate plane y(x) and the correction reference Yref(x). For the correction reference Yref(x), a mean luminance of the image is used.

On the other hand, (2) the example of processing of the present disclosure is an example of processing in the case where sampling point selection based on a result of clustering is executed. In particular, this is an example of processing in the case where a correction function calculated by the following processes (S1) to (S3) is applied:

(S1) a process of clustering described hereinabove with reference to FIGS. 2 to 4 and determination of a sampling point extraction cluster and a selection process of sampling points from the sampling point extraction cluster,
(S2) calculation of an appropriate plane y(x) based on pixel values and position information of the sampling points, and
(S3) calculation of a correction function (expression 6) that varies the correction amount in response to the ratio between the calculated approximate plane y(x) and the correction reference Yref(x).

The example is an example of processing in the case where correction is performed applying the correction function (expression 6) generated through the steps S1 to S3. For the correction reference Yref(x), a mean luminance of the image is used.
It is to be noted that the example depicted in (2) of FIG. 7 is an example of processing in the case where a cluster that includes many pixels whose luminance is close to a mean luminance or a median luminance of an image to be a correction target image. A cluster that includes many high luminance pixels or low luminance pixels whose luminance is displaced by a great amount from a mean luminance or a median luminance of an image to be a correction target image is not set as a sampling point extraction cluster.
In each of (1) and (2) of FIG. 7, figures (A), (B), and (C) are depicted.

(A) is a view depicting a pixel position-luminance correspondence curve (= luminance values of pixels before correction) and a selection form of sampling points.
(B) is a view depicting an appropriate plane y(x) (= pixel position-luminance approximate curve) generated on the basis of sampling points.
(C) is a view depicting a pixel position-luminance correspondence curve (= luminance values of pixels before correction), an appropriate plane y(x), and a pixel position-luminance correspondence curve (= luminance values of pixels after correction) that is pixel values corrected on the basis of the correction function. (C) further depicts Yref(x) in the (expression 6) described hereinabove, namely, a mean luminance value Yref(x) of an image to be used as a correction reference prescribed in advance.

In all of (A) to (C), the axis of abscissa indicates a pixel position, and the axis of ordinate indicates a luminance value (pixel value).
In the example of processing of the conventional type of (1) of FIG. 7, namely, in the example of an image correction process in the case where spatially equal sampling point selection is executed, sampling points are selected at equal distances along the axis of abscissa indicating a pixel position as depicted in (A). The pixel at the pixel position (x1) at which the luminance value indicates a sudden increase is also sampled.
It is to be noted that this high luminance region corresponds, for example, to the river region or the like of the image described hereinabove with reference to FIG. 4.
As depicted in (B) of (1) of FIG. 7, the approximate plane y(x) is generated such that the sampling points selected at equal distances are connected smoothly. The approximate plane y(x) is curved in the proximity of the pixel position (x1) at which the luminance indicates a sudden increase such that it approaches the luminance level at the pixel position (x1).
(C) of (1) of FIG. 7 depicts a pixel position-luminance correspondence curve (= luminance values of pixels after correction) corrected on the basis of the correction function (expression 6).
This pixel position-luminance correspondence curve (= luminance values of pixels after correction) is a curve corresponding to the correction pixel values Y'(x) calculated according to the (expression 6) described hereinabove.
As depicted in (C) of (1) of FIG. 7, the pixel position-luminance correspondence curve (= luminance values of pixels after correction) is set such that it varies by a great amount upwardly and downwardly in the proximity of the pixel position (x1) at which the luminance indicates a sudden increase.

This is because it is set that, in the (expression 6) described hereinabove, namely, in

$$Y'(x) = (Yref(x)/y(x))Y(x)...(expression\ 6)$$

as the difference between Yref(x) and y(x) increases, (Yref(x)/y(x)) increases, and the correction amount for the pixel value Y(x) before correction increases.

As depicted in (C) of (1) of FIG. 7, in the proximity of the pixel position (x1) at which the luminance indicates a sudden increase, the difference between

the pixel position-luminance approximate curve (y(x)) corresponding to the correction function and

the mean luminance value Yref(x) of an image used as the correction reference set in advance

becomes great, and (Yref(x)/y(x)) in the (expression 6) described hereinabove becomes great, and the correction amount for the pixel values Y(x) before correction becomes great.

As a result, as depicted in (C) of (1) of FIG. 7, in the proximity of the pixel position (x1) at which the luminance value before correction is significantly high in comparison with the surroundings, the correction amount is set great, and a sudden pixel value change, namely, an artifact, appears.

Further, since the pixel value Y'(x) after correction of the pixel position (x1) is in a state corrected by a great amount in comparison with the original pixel value Y(x) before correction, as a result, the luminance difference from the luminance of the surrounding pixels decreases, and the dynamic range of the overall image decreases.

In contrast, the example of processing of the present disclosure depicted in (2) of FIG. 7 is an example of processing in the case where sampling point selection based on a result of clustering is executed. This is an example of processing in the case where a cluster that includes many pixels having a luminance proximate to a mean luminance or a median luminance of the image is set as a sampling point extraction cluster. A cluster that includes many high luminance pixels or low luminance pixels whose luminance is displaced by a great amount from a mean luminance or a median luminance of the image to be a correction target image is not set as a sampling point extraction cluster.

In the example of processing of the present disclosure of (2) of FIG. 7, since sampling points are extracted from a cluster that includes many pixels having a luminance proximate to a mean luminance or a median luminance of the image, the pixel at the pixel position (x1) at which the luminance value indicates a sudden increase from the surroundings is not sampled.

As depicted in (B) of (2) of FIG. 7, the approximate plane y(x) is generated such that sampling points extracted from within a cluster that includes many pixels having a luminance proximate to a mean luminance or a median luminance of the image are connected smoothly. The approximate plane y(x) is not curved in the proximity of the pixel position (x1) at which the luminance indicates a sudden increase. In particular, such a curve that approaches the luminance level at the pixel position (x1) as depicted in (B) of (1) of FIG. 7 is not formed.

(C) of (2) of FIG. 7 depicts a pixel position-luminance correspondence curve (= luminance values of pixels after correction) that represents pixel values corrected according to the correction function (expression 6) generated on the basis of the sampling points selected on the basis of a result of clustering.

The pixel position-luminance correspondence curve (= luminance values of pixels after correction) is a curve corresponding to the corrected pixel values Y'(x) calculated according to the (expression 6) described hereinabove.

As depicted in (C) of (2) of FIG. 7, the pixel position-luminance correspondence curve (= luminance values of pixels after correction) is set such that, in the proximity of the pixel position (x1) at which the luminance indicates a sudden increase, it substantially keeps pixel values (luminance values) before correction.

This is because it is set that, in the (expression 6) described hereinabove, namely, in

$$Y'(x) = (Yref(x)/y(x))Y(x)...(expression\ 6)$$

as the difference between Yref(x) and y(x) decreases, (Yref(x)/y(x)) decreases, and the correction amount for the pixel value Y(x) before correction decreases.

As depicted in (C) of (2) of FIG. 7, in the proximity of the pixel position (x1) at which the luminance indicates a sudden increase, the difference between

the approximate plane y(x) and

the mean luminance value Yref(x) of an image used as the correction reference set in advance

is set so as to be small.

In particular, (Yref(x)/y(x) in the (expression 6) described hereinabove becomes small and the correction amount for the pixel value Y(x) before correction becomes small.

This is because it is set that, at the time of generation of the approximate plane y(x), the pixel at the pixel position (x1) at which the luminance indicates a sudden increase is not selected as a sampling point, and the pixel value of this high luminance pixel is not reflected on the approximate plane y(x).

As a result, as depicted in (C) of (2) of FIG. 7, at the pixel position (x1) at which the luminance value before correction is significantly high in comparison with the surroundings, the correction amount is set small, and correction that does not give rise to a great change in pixel value across the correction is performed.

As a result, appearance of such a sudden pixel value change as indicated in (C) of (1) of FIG. 7 described hereinabove as the processing of the conventional type, namely, of an artifact, is prevented.

Further, since the pixel value Y'(x) after correction for the pixel position (x1) does not change significantly from the original pixel value Y(x) before correction, as a result, the luminance difference from the luminance of the surrounding pixels does not decrease, and decrease of the dynamic range of the overall image is also suppressed.

In this manner, by performing image correction to which the image processing apparatus 100 of the present disclosure depicted in FIG. 1 is applied, it is possible to prevent appearance of an artifact in a region having a great luminance change, decrease of the dynamic range of the overall image can also be prevented, and pixel value correction with less deterioration in image quality can be implemented.

FIG. 8 depicts another example of processing of the present disclosure.

(3) Example of Processing of Present Disclosure (example of processing for image correction in case where sampling point selection based on result of clustering is executed)

This example of processing is an example of image correction in the case where, for example, part of an image is shaded dark by a cloud.

However, this example is an example of a case in which the region shaded dark by a cloud is also an analysis target region, for example, an image region of cabbages of crops that are an analysis target of a growth state and in which an analysis target region in which restoration to correct pixel values is demanded.

In such a case as just described, the region shaded dark by a cloud is also subjected to a process for selecting a sampling point similarly to the other light region.

In particular, a cluster that includes many regions of cabbages of an analysis target as an imaging target object is set as a sampling point extraction cluster.

In this manner, the example of processing of the present disclosure depicted in (3) of FIG. 8 is an example of processing of a case in which an analysis target region, for example, a region including an image region of cabbages of crops, is set as a sampling point extraction cluster.

In the example of processing of the present disclosure of (3) of FIG. 8, as depicted in (A), sampling points are extracted from a region in which the luminance drops by an influence of the shade of a cloud similarly to the other light region if the region is a region including the image region of cabbages.

As depicted in (B) of FIG. 8, the approximate plane y(x) is generated such that sampling points are connected smoothly. The approximate plane y(x) is curved in a region in which the luminance is low such that it approaches the luminance level at the position.

(C) of FIG. 8 depicts a pixel position-luminance correspondence curve (= luminance values of pixels after correction) that indicates pixel values corrected according to the correction function (expression 6) generated on the basis of sampling points selected on the basis of a result of clustering.

This pixel position-luminance correspondence curve (= luminance values of pixels after correction) is a curve corresponding to the correction pixel value Y'(x) calculated according to the (expression 6) described hereinabove.

As depicted in (C) of FIG. 8, it is set that, in the proximity of a pixel position at which the luminance drops, the pixel position-luminance correspondence curve (= luminance values of pixels after correction) is corrected in a higher and lighter direction from the pixel value (luminance value) before correction.

This is because it is set that, in the (expression 6) described hereinabove, namely, in

$$Y'(x) = (Yref(x)/y(x))Y(x) \ldots (expression\ 6)$$

as the difference between Yref(x) and y(x) increases, (Yref(x)/y(x)) increases, and the correction amount for the pixel value Y(x) before correction increases.

As depicted in (C) of FIG. 8, in the proximity of a pixel position at which the luminance is low, the difference between

the approximate plane (y(x)) and

the mean luminance value Yref(x) of an image used as the correction reference set in advance

is great.

In particular, (Yref(x)/y(x)) in the (expression 6) described hereinabove becomes great, and the correction amount for the pixel value Y(x) before correction becomes great.

This is because it is set that, at the time of generation of the approximate plane y(x), the pixel at the pixel position at which the luminance is also low is selected as a sampling point, and the pixel value of this low luminance pixel is reflected on the approximate plane y(x).

As a result, as depicted in (C) of FIG. 8, at the pixel position at which the luminance value before correction is low in comparison with the surroundings, the correction amount is set great, and correction for increasing the luminance value is performed.

As a result, the region in which the luminance value is decreased by the shade of a cloud is corrected lighter, and a correction image similar to that where the influence of the cloud is removed is generated.

In this manner, in image correction to which the image processing apparatus 100 of the present disclosure depicted in FIG. 1 is applied, even in the case where the luminance is varied by an influence of a shadow or the like in an image region including a correction target object, by setting a cluster including pixels of the image region as a sampling point extraction cluster, it becomes possible to perform pixel value correction that decreases the influence of the shadow in the image region.

[2. Image Processing Sequence Executed by Image Processing Apparatus]

Now, a sequence of an image process executed by the image processing apparatus 100 depicted in FIG. 1 is described with reference to a flow chart depicted in FIG. 9.

It is to be noted that the process according to the flow chart depicted in FIG. 9 can be executed, for example, according to a program stored in the storage section of the image processing apparatus 100. For example, the image process can be executed under the control of a data processing section (control section) that includes a CPU or the like having a program execution function.

In the following, processes in steps of the flow chart depicted in FIG. 9 are described sequentially.

(Step S101)

First, the image processing apparatus 100 receives a captured image to be a correction target as an input thereto in step S101.

This captured image is the captured image 10 depicted in FIG. 1 and is one image captured, for example, using a drone. The captured image is, for example, an image having luminance unevenness or color unevenness in that a partial region thereof is shaded by a cloud or the like and has pixel values set rather dark in comparison with the other region.

(Step S102)

Then in step S102, the image processing apparatus 100 executes clustering (cluster division) of dividing component pixels of the captured image 10 of the correction target into a plurality of subsets (clusters).

This process is executed by the sampling point selection section 101 depicted in FIG. 1.

As described hereinabove, such existing clustering methods as given below can be applied.

(a) K-Means method,
(b) K-NN method (K-Nearest Neighbor method),
(c) Ward method, and
(d) semantic segmentation

Further, without depending upon such existing methods, for example, the captured image 10 may be divided into a plurality of regions using boundaries set by the user or boundaries prescribed in advance such that the divisional regions are set as clusters as described hereinabove with reference to FIG. 6.

It is to be noted that, as the feature information of a pixel to be applied to cluster classification, information of various features such as "luminance," "color," or any one of R, G, and B values, for example, a pixel value of "G," can be utilized.

For example, if the "luminance" is utilized as feature information to be applied to cluster classification, then pixels can be classified into a plurality of clusters in a unit of a set of pixels whose luminance is similar to each other.

On the other hand, for example, if the pixel value of "G" is utilized as feature information to be applied to cluster classification, then pixels can be classified into a plurality of clusters in a unit of a set of pixels whose output values of G are similar to each other.

(Step S103)

Then in step S103, the image processing apparatus 100 selects sampling points from within the captured image 10 of the correction target.

This process is also executed by the sampling point selection section 101 depicted in FIG. 1.

After the sampling point selection section 101 performs clustering of component pixels of the captured image 10 of the correction target in step S102, it determines a sampling point extraction cluster and selects sampling points from within the determined sampling point extraction cluster.

As described hereinabove, as a determination method of a sampling point extraction cluster, for example, any one of the following methods can be applied.

(1) One or more clusters are determined as a sampling point extraction cluster or sampling point extraction clusters in order beginning with a cluster that includes a greatest number of samples (pixels). A cluster is determined as a sampling point extraction cluster.

(2) A cluster whose mean value or median in the clusters is the center of all the clusters or several clusters adjacent to the cluster are determined as a sampling point extraction cluster or sampling point extraction clusters.

(3) A user selects a specific cluster, and the selected cluster is determined as a sampling point extraction cluster.

For example, in the case where the process of (2) above is to be performed, if a mean value or a median of pixel values or luminance values of pixels belonging to each cluster is utilized, then a cluster that includes an extremely dark pixel region or light region in an image is not set as a sampling point extraction cluster, and a sampling point is not extracted from the cluster.

On the other hand, in the case where cluster selection by the user of (3) above is to be performed, such a process as to select a cluster that includes a specific imaging target (object) whose accurate pixel value is to be found, for example, that includes many pixels of crops of a field, as a sampling point extraction cluster is performed.

(Step S104)

Then in step S104, the image processing apparatus 100 generates a correction function utilizing pixel values of the sampling points.

This process is executed by the correction function calculation section 102 depicted in FIG. 1.

The correction function calculation section 102 uses the pixel values of the sampling points (pixels) selected by the sampling point selection section 101 to calculate a correction function to be applied to all component pixels of the captured image 10.

As described hereinabove, the correction function calculation section 102 first performs correction curve fitting or the like as a two-dimensional function of image coordinates using any one of existing methods such as, for example, Kernel regression interpolation (Kernel Regression), spline surface interpolation, polynomial approximate curved surface, and linear interpolation to calculate an appropriate plane $y(x)$.

The approximate plane $y(x)$ is the approximate plane $y(x)$ indicated by the (expression 2) described hereinabove.

Further, the correction function calculation section 102 calculates a correction function (expression 6) for varying the correction amount in response to the ratio between the approximate plane $y(x)$ and the correction reference $Yref(x)$.

As the correction reference $Yref(x)$, for example, a mean value or a median of pixel values of the sampling point extraction cluster or a value selected by the user can be used. The selected value by the user may be a value changed from a value in response to the pixel position.

By calculating a correction function using only pixel values of sampling points (pixels) selected by the sampling point selection section 101, the correction function calculation section 102 can generate a correction function based, for example, on pixel values of sampling pixels configured from average pixel values of the image. In other words, a correction function from which the influence of pixels having an extreme luminance or pixel value is removed can be generated.

Further, for example, in the case where an object that is to be an analysis target is specified, by generating a correction function on the basis of pixel values of sampling points selected from a cluster that includes many image regions of the object, it is also possible to generate a correction function for accurately performing pixel value correction of the object.

For example, in the case where the analysis target object is the cabbages of the field captured using a drone, if a correction function based on pixel values of sampling pixels selected from within a sampling point extraction target that is the image region of the cabbages is generated, then it is possible to generate a correction function specified for the image region of the cabbages.

(Step S105)

Then in step S105, the image processing apparatus 100 calculates corrected pixel values by applying the correction function (expression 6) to the pixel values of the pixels of the captured image 10 of the correction target.
This process is a process executed by the image correction section (correction function application section) 103 depicted in FIG. 1.
The image correction section (correction function application section) 103 calculates pixel values of the pixels after correction by applying the correction function calculated by the correction function calculation section 102 in step S104, namely, the (expression 6) given below:

$$Y'(x) = (Yref(x)/y(x))Y(x)...(expression 6)$$

The pixel value calculation process according to the above expression is executed.
It is to be noted that, in the (expression 6) above,
Y'(x) is a signal value (pixel value, luminance value, or the like) corresponding to the pixel position (x) after correction of the captured image 10,
Y(x) is a signal value (pixel value, luminance value, or the like) corresponding to the pixel position (x) before the correction of the captured image 10,
y(x) is an approximate plane y(x) indicated by the (expression 2) given hereinabove, and
Yref(x) is a correction reference prescribed in advance.
As the correction reference: Yref(x), for example, a mean value or a median of pixel values of the sampling point extraction cluster or a value selected by the user can be used. The selected value by the user may be a value changed from a value in response to the pixel position.
The image correction section (correction function application section) 103 calculates corrected pixel values of all component pixels of the captured image 10 according to the correction function (expression 6) calculated by the correction function calculation section 102 and generates a corrected image 20 to which the calculated pixel values are set.

(Step S106)

Finally, the image processing apparatus 100 generates and outputs a corrected image configured from the pixel values corrected by the pixel value correction process in step S105. For example, the image processing apparatus 100 executes an outputting process to a display section or a storage process into a storage section.
As a result, it is possible to prevent appearance of an artifact in a region having a great luminance change and also decrease of the dynamic range of an image and generate a corrected image with less deterioration in image quality as described hereinabove with reference to FIGS. 7 and 8.

[3. Configuration and Processing of Second Working Example of Image Processing Apparatus of Present Disclosure]

Now, a configuration and processing of a second working example of the image processing apparatus of the present disclosure is described with reference to FIG. 10 and the subsequent drawings.
FIG. 10 is a block diagram depicting an example of a configuration of the image processing apparatus 120 of the second working example of the present disclosure. As depicted in FIG. 10, the image processing apparatus 120 includes a reduced image generation section 121, a sampling point selection section 101, a correction function calculation section 102, and an image correction section (correction function application section) 103.
The image processing apparatus 120 depicted in FIG. 10 is configured such that the reduced image generation section 121 is provided in a stage preceding to the sampling point selection section 101 of the image processing apparatus 100 of the first working example described hereinabove with reference to FIG. 1.
The sampling point selection section 101, the correction function calculation section 102, and the image correction section (correction function application section) 103 that are the other components execute processes substantially similar to those in the first working example.
In the following, description is given principally of differences of the image processing apparatus 120 from the working example 1 described hereinabove.
The image processing apparatus 120 receives one captured image 10 to be a correction target as an input thereto, executes correction, and then outputs a corrected image 20.
It is to be noted that, in the present working example, the captured image 10 of the correction target is also one captured image captured by a single time image capturing process of a camera. In other words, the captured image 10 is not a composite image generated by performing a joining process of joining a plurality of images to each other.

The reduced image generation section 121 receives the captured image 10 of the correction target as an input thereto and generates a reduced image reduced from the captured image 10.

For the reduction method of the image, existing image reduction methods such as, for example, a nearest neighbor method, an area averaging method, a bilinear method, a bicubic method, and a Lanczos method can be applied. Further, a reduced image may be calculated by using a median value (central value) or a mean value of a reduction range as a signal value of the reduced image.

The sampling point selection section 101 and the correction function calculation section 102 execute a selection process of a sampling point and a calculation process of a correction function utilizing the reduced image generated by the reduced image generation section 121.

The correction function calculation section 102 calculates an approximate plane $y(x)$ and a correction function for the reduced image size.

The image correction section (correction function application section) 103 generates a corrected image using the correction function calculated by the correction function calculation section 102.

The image correction section (correction function application section) 103 receives a captured image 10 that is not reduced as an input thereto and corrects the pixel values of component pixels of the captured image 10.

The image correction section (correction function application section) 103 first expands the approximate plane $y(x)$ and the correction function of the reduced image size calculated by the correction function calculation section 102 to the size of the captured image 10 before the reduction to generate an expanded correction function and applies the expanded correction function to the captured image 10.

Alternatively, the image correction section (correction function application section) 103 may receive the reduced image generated by the reduced image generation section 121 as an input thereto and apply the approximate plane $y(x)$ and the correction function of the reduced image size calculated by the correction function calculation section 102 to the reduced image to generate a correction image for the reduced corrected image, whereafter a process for expanding the reduced corrected image is performed. As the image expansion method, existing expansion methods such as a nearest neighbor method, a bilinear method, a bicubic method, and a Lanczos method can be applied.

In the process of the second working example, after the reduced image generation section 121 generates a reduced image of a captured image 10, the processes of the sampling point selection section 101, the correction function calculation section 102, and the image correction section (correction function application section) 103 can be executed as processes for the reduced image, and the calculation amount can be reduced, and improvement of the processing speed and simplification of hardware and a program to be applied to the processing can be simplified.

Now, a sequence of an image process executed by the image processing apparatus 120 depicted in FIG. 10 is described with reference to a flow chart of FIG. 11.

It is to be noted that processes according to the flow chart depicted in FIG. 11 can be executed according to a program, for example, stored in the storage section of the image processing apparatus 120. The processes can be executed under the control of the data processing section (control section) that includes a CPU having a program execution function and so forth.

In the following, the processes in individual steps of the flow chart depicted in FIG. 11 are described sequentially.

(Step S201)

First, the image processing apparatus 120 receives a captured image to be a correction target as an input thereto in step S201.

This captured image is the captured image 10 depicted in FIG. 10 and is one image captured, for example, using a drone. The captured image is an image having luminance unevenness or color unevenness in that, for example, a partial region is shaded by a cloud or the like and has a pixel value set rather dark in comparison with the other region.

(Step S202)

Then in step S202, the image processing apparatus 120 generates a reduced image of the captured image 10 of the correction target.

This process is a process executed by the reduced image generation section 121 depicted in FIG. 10.

The reduced image generation section 121 generates a reduced image by applying existing image reduction methods such as, for example, a nearest neighbor method, an area averaging method, a bilinear method, a bicubic method, and a Lanczos method to the captured image 10 of the correction target. It is to be noted that a reduced image may be generated in which a median value (central value) or a mean value of a reduced range is used as a signal value of the reduced image.

(Steps S203 to S205)

The processes in steps S203 to S205 are processes similar to the processes in steps S102 to S104 of the flow of the working example 1 describe hereinabove with reference to FIG. 9.

However, in the present working example, the processes in steps S203 to S205 are executed for the reduced image generated in step S202.

In step S203, clustering (cluster division) of dividing component pixels of the reduced image of the captured image 10 of the correction target into a plurality of subsets (clusters) is executed.

In step S204, a sampling point extraction cluster from clusters generated as a result of the clustering is determined, and sampling points from the determined sampling point extraction cluster are selected.

The processes described are executed by the sampling point selection section 101 depicted in FIG. 10.

Further, in step S205, a correction function is generated utilizing the pixel values of the sampling points.

This process is executed by the correction function calculation section 102 depicted in FIG. 10.

As described hereinabove, in the present working example 2, the correction function calculation section 102 calculates a correction function $y(x)$ for the reduced image size (= approximate plane calculation function $y(x)$).

(Steps S206 to S207)

Then in step S206, the image processing apparatus 120 calculates corrected pixel values by applying the correction function to the pixel values of the pixels of the captured image 10 of the correction target.

Finally in step S207, a corrected image configured from the corrected pixel values is generated and outputted. For example, an outputting process to the display section or a storage process into the storage section is executed.

The processes mentioned are processes executed by the image correction section (correction function application section) 103 depicted in FIG. 10.

As described hereinabove, the image correction section (correction function application section) 103 receives, for example, a captured image 10 that is not in a reduced state as an input thereto and corrects the pixel values of the component pixels of the captured image 10.

In this case, the image correction section (correction function application section) 103 first expands the approximate plane $y(x)$ and the correction function of the reduced image size calculated by the correction function calculation section 102 to the size of the captured image 10 before the reduction to generate an expanded correction function and applies the expanded correction function to the captured image 10.

Alternatively, the image correction section (correction function application section) 103 may receive a reduced image generated by the reduced image generation section 121 as an input thereto and apply the approximate plane $y(x)$ and the correction function for the reduced image size calculated by the correction function calculation section 102 as they are to the reduced image to generate a corrected image of the reduced corrected image, whereafter a process for expanding the reduced corrected image is performed. As the image expansion method, existing image expansion methods such as a nearest neighbor method, a bilinear method, a bicubic method, and a Lanczos method can be utilized.

As described hereinabove, according to the processes of the second working example, it is possible for the reduced image generation section 121 to generate a reduced image of a captured image 10 such that later processing is executed by applying the reduced image. This makes reduction of the calculation amount possible, and improvement of the processing speed and simplification of hardware and a program to be applied to the processing are implemented.

[4. Configuration and Processing of Third Working Example of Image Processing Apparatus of Present Disclosure]

Now, a configuration and processing of a third working example of the image processing apparatus of the present disclosure is described with reference to FIG. 12 and the subsequent drawings.

FIG. 12 is a block diagram depicting an example of a configuration of the image processing apparatus 130 of the third working example of the present disclosure. As depicted in FIG. 12, the image processing apparatus 130 includes a reduced image generation section 121, a sampling point selection section 101, a correction function calculation section 102, an image correction section (correction function application section) 103, and a composite image generation section 131.

The image processing apparatus 130 depicted in FIG. 12 is configured such that the composite image generation section 131 is added to the image processing apparatus 120 of the second working example described hereinabove with reference to FIG. 10.

The composite image generation section 131 is added as a succeeding stage processing section of the image correction section (correction function application section) 103.

The reduced image generation section 121, the sampling point selection section 101, the correction function calculation section 102, and the image correction section (correction function application section) 103 that are the other components of the image processing apparatus 130 execute processes substantially similar to those in the second working example.

In the following, description is given principally of differences from the working example 2 described above.

The image processing apparatus 130 depicted in FIG. 12 generates and outputs a composite image 30 in which a plurality of images captured, for example, using a drone is connected as a final output image.

The input image is a plurality of images captured, for example, using a drone. As depicted in FIG. 12, a plurality of images including images P1 to Pn is sequentially inputted as the captured image 10 to the image processing apparatus 130.

The images P1 to Pn are images successively captured, for example, using a drone and are images each obtained by capturing a partial region of a vast region. By joining the images to each other, one image corresponding to the vast region can be generated.

However, a drone that moves in the sky undergoes, when it captures images, a change in posture due to the influence of wind and so forth. As a result, at a timing at which each image is captured, reflected light from an imaging target that is received by a camera changes from a change of the relation of the camera, the imaging target, and the light source, and the captured images fail to be equalized in luminance and color but become sparse. If images having luminance and colors different from each other in this manner are connected to each other to generate a single composite image, then the resulting composite image is deteriorated in quality in that the continuity is lost at connection portions of the images.

Further, even one image sometimes includes a region shaded by a cloud in the sky or an air plane, a bird, or the like that is a different flying body and another region that is not shaded, and between such regions, a difference in luminance or color appears. In short, unevenness in luminance or color occurs.

The image processing apparatus 130 of the working example 3 depicted in FIG. 12 generates a composite image 30 of high quality in which correction for reducing luminance unevenness and color unevenness in a unit of a captured image and also a luminance difference and a color difference between the images configuring the composite image.

The components from the reduced image generation section 121 to the image correction section 103 of the image processing apparatus 130 of the working example 3 depicted in FIG. 12 sequentially execute processing for each of the images (P1 to Pn) configuring a composite image before correction to generate corrected images 20-1 to 20-n.

The processes for each image unit are processes similar to those of the configuration of the working example 2 described hereinabove with reference to FIG. 10.

In the working example 3, the processes for each image unit are sequentially executed for each of the images (P1 to Pn) configuring the composite image before correction. In particular, same processes are executed repeatedly by n times for the n images to generate corrected images 20-1 to 20-n.

The composite image generation section 131 receives the n corrected images 20-1 to 20-n as an input thereto and generates a composite image 30 in which the corrected images 20-1 to 20-n are connected to each other.

The composite image generation section 131 sets a correction reference signal to be a reference, for example, upon joining of images and causes a mean signal (mean value of pixel values or luminance values) of the images, a mean signal (mean value of pixel values or luminance values) of an overlapping region upon joining, and a mean value (mean value of pixel values or luminance values) of a sampling point extraction cluster to coincide with the corrected reference signal to generate a composite image in which the discontinuity at joining portions is reduced.

It is to be noted that the correction reference signal may use a value set in advance or may use a specific single image or a mean value of a plurality of images.

In particular, such adjustment, for example, as to make mean luminance of adjacent images coincide with each other or to set the difference between such images to a prescribed range or less to connect the adjacent images.

Further, upon image connection (joining), such a process as to detect an overlapping region of adjacent images and delete the overlapping region from one of the images or to calculate a mean value of an overlapping region included in a plurality of images and performs joining of the images into one region to perform image correction such that an overlapping region does not appear in the composite image.

The image processing apparatus 130 of the working example 3 depicted in FIG. 12 of the working example 3 carries out correction for reducing luminance unevenness or color unevenness in a unit of one captured image and further also reduces a luminance difference or a color difference between the images, which are to configure a composite image, to generate a composite image 30 of high quality.

A sequence of an image process executed by the image processing apparatus 130 depicted in FIG. 12 is described with reference to a flow chart depicted in FIG. 13.

It is to be noted that the process according to the flow chart depicted in FIG. 13 can be executed, for example, according to a program stored in the storage section of the image processing apparatus 130. For example, the process can be executed under the control of the data processing section (control section) that includes a CPU and so forth having a program execution function.

In the following, processes in individual steps of the flow chart depicted in FIG. 13 are sequentially described.

(Step 301)

First in step S301, the image processing apparatus 130 selects a captured image to be a correction target from among a plurality of captured images.
In particular, the images (P1 to Pn) that are to configure a composite image before correction depicted in FIG. 12 are sequentially selected as a correction target image.
The images P1 to Pn are images successively captured, for example, using a drone and are images each of which is a captured image of a partial region of a certain vast region. By joining the images to each other, a single image corresponding to the vast region can be generated.
However, the images are sparse images among which the luminance or the color is not uniform due to a difference in condition at the time of capturing, and also in one image, luminance unevenness or color unevenness arising from a region of a shadow, a specular reflection region, or the like exists.

(Step S302)

Then in step S302, the image processing apparatus 130 receives the correction target image selected in step S301 as an input thereto.

(Steps S303 to S308)

Processes in steps S303 to S308 are processes similar to the processes in steps S202 to S207 in the flow of the working example 2 described hereinabove with reference to FIG. 11.
In particular, in step S303, a reduction process is executed for the captured image 10 of the correction target image.
In step S304, clustering for the reduced image is executed.
In step S305, determination of a sampling point extraction cluster from a result of the clustering and selection of sampling points from the sampling point extraction cluster are executed.
Further, in step S306, a generation process of a correction function based on the pixel values of the selected sampling points is executed.
In step S307, the generated correction function is applied to calculate corrected pixel values of the correction target image.
In step S308, a correction image configured from the corrected pixel values is generated.

(Step S309)

In step S309, it is decided whether or not generation of a corrected image is completed for all captured images (P1 to Pn).
In the case where there remains a non-processed image, the non-processed image is selected in step S301 and the processes in steps S302 to S308 are executed for the non-processed image.
If it is decided in step S309 that generation of a corrected image is completed for all captured images (P1 to Pn), then the processing advances to step S310.
At this point of time, generation of the corrected images 20-1 to 20-n depicted in FIG. 12 in which the pixel values have been corrected is completed.

(Step S310)

Finally in step S310, the image processing apparatus 130 joins all corrected images 20-1 to 20-n to generate and output a composite image 30.
This process is a process executed by the composite image generation section 131 depicted in FIG. 12.
As described hereinabove, the composite image generation section 131 sets a correction reference signal that is, for example, a reference at the time of joining of images and causes a mean signal of images or a mean signal of an overlapping region upon joining and a mean value of a sampling point extraction cluster to coincide with the correction signal to generate an image in which discontinuous steps at the connection portions are reduced.
For the correction reference signal, a value set in advance, for example, a mean value or the like of a single specific image or of a plurality of images, can be utilized. This makes it possible to generate a composite image in which mean luminance of adjacent images coincide with each other or the difference between them is set to a prescribed value range or less.

It is to be noted that, upon image connection (joining), such a process as to detect an overlapping region of adjacent images and delete the overlapping region from one of the adjacent images or the like is performed. As an alternative, a mean value of an overlapping region included in a plurality of images may be calculated such that the images are connected as a single region. As another alternative, pixel values of an overlapping region may be determined by $\alpha$ blending of overlapping images to change the image in the overlapping region smoothly. Although the $\alpha$ blending is performed in order to change, for example, in the case where two images are considered, the signal value continuously from the image A to the image B, upon $\alpha$ blending, taking an influence of lens distortion, shading, or peripheral blurring into consideration, the value may be added to the blending rate so as to reflect the distance from the center of the screen image such that the rate increases toward the center of the screen image.

By executing such processes as described above, the image processing apparatus 130 of the working example 3 depicted in FIG. 12 can generate a composite image 30 of high quality in which luminance unevenness and color unevenness of one captured image unit are reduced and also a luminance difference and a color difference between images configuring the composite image are reduced.

[5. Other Working Examples]

Now, other working examples are described with reference to FIG. 14 and the subsequent drawings.

The following three working examples are described.

(Working Example 4) Working example in which a selection process of sampling points in a non-processed image is executed by referring to sampling point position information of surrounding images processed already
(Working Example 5) Working example in which a calculation process of a correction function for a non-processed image is executed by referring to correction function information of surrounding images processed already
(Working Example 6) Working example in which a calculation process of an approximate plane in a non-processed image is executed by referring to approximate plane information of surrounding images processed already

(5-1) (Working Example 4) Working example in which a selection process of sampling points in a non-processed image is executed by referring to sampling point position information of surrounding images processed already

First, as the working example 4, a working example in which a selection process of sampling points in a non-processed image is executed by referring to sampling point position information of surrounding images processed already is described.

FIG. 14 is a block diagram depicting an example of a configuration of an image processing apparatus 140 of the present working example 4. As depicted in FIG. 14, the image processing apparatus 140 includes a reduced image generation section 121, a sampling point selection section 101, a correction function calculation section 102, an image correction section (correction function application section) 103, a composite image generation section 131, and an image corresponding sampling point position information storage section 141.

The image processing apparatus 140 depicted in FIG. 14 is configured such that the image corresponding sampling point position information storage section 141 is added to the image processing apparatus 130 of the third working example described hereinabove with reference to FIG. 12.

The reduced image generation section 121, the sampling point selection section 101, the correction function calculation section 102, the image correction section (correction function application section) 103, and the composite image generation section 131 that are the other components of the image processing apparatus 140 basically execute processes substantially similar to those of the third working example.

However, the sampling point selection section 101 executes a difference process.

The image corresponding sampling point position information storage section 141 stores sampling point position information of an image for which a sampling point selection process has been performed by the sampling point selection section 101.

Further, when the sampling point selection section 101 executes a sampling point selection process for a new image, it acquires sampling point position information of processed images around the processing target image, namely, of images for which the sampling point selection process has been performed by the sampling point selection section 101, from the image corresponding sampling point position information storage section 141. The sampling point selection section 101 refers to the information acquired from the image corresponding sampling point position information storage section 141 to execute a sampling point selection process of the new image.

A particular example is described with reference to FIG. 15.

At an upper left portion of FIG. 15, a composite image before correction is depicted. The composite image is configured from a plurality of images captured successively, for example, using a drone.

The images configuring the composite image are inputted sequentially to and processed by the image processing apparatus 140.

It is assumed that the processing is performed according to arrow marks depicted in FIG. 15.

On the right side in FIG. 15, five adjacent images that are part of the images configuring the composite image are depicted.

They are an image Px for which the sampling point selection section 101 is to subsequently execute a sampling point selection process and images Pa to Pd for which a sampling point selection process is executed already among surrounding images of the image Px.

When the sampling point selection section 101 performs a selection process of sampling points from the image Px for which a sampling point selection process is to be performed subsequently, it refers to the sampling points set in the images Pa to Pd, namely, in the surrounding images of the image Px, for which the sampling point selection process has been executed already.

The sampling point selection process for the image Px is performed utilizing a result of the reference.

For example, it is decided on the basis of surrounding images that such a region a or another region b as depicted in FIG. 15 has a high degree of possibility that it may include an image of a sampling point selection target, and performs selection of sampling points from regions included in the regions a and b in the image Px.

By performing such a process as described above, it is possible to omit or simplify the clustering process described above and such steps as determination of a sampling point extraction cluster and a selection process of sampling points from the sampling point extraction cluster.

Further, for example, by adopting sampling points selected from surrounding images at a fixed ratio as sampling points of the image of the sampling point selection target as depicted in FIG. 16, it can be avoided that sampling points of the image of the sampling point selection target have selection arrangement of sampling points much different from that of the surrounding images. By performing such a process as just described, correction can be carried out stably.

It is to be noted that it is preferable to perform the clustering process, determination of a sampling point extraction cluster, and a selection process of sampling points from the sampling point extraction cluster described above without omitting them and to perform such processes as referring, when such processes are performed, to sampling point information of processed surrounding images to modify sampling points to be selected on the basis of information of the surrounding images.

(5-2) (Working Example 5) Working example in which a calculation process of a correction function for a non-processed image is executed by referring to correction function information of surrounding images processed already

Now, as the working example 5, a working example in which a calculation process of a correction function for a non-processed image is executed by referring to correction function information of surrounding images processed already is described.

FIG. 17 is a block diagram depicting an example of a configuration of an image processing apparatus 150 of the present working example 5. As depicted in FIG. 17, the image processing apparatus 150 includes a reduced image generation section 121, a sampling point selection section 101, a correction function calculation section 102, an image correction section (correction function application section) 103, a composite image generation section 131, and an image corresponding correction function storage section 151.

The image processing apparatus 150 depicted in FIG. 17 is configured such that the image corresponding correction function storage section 151 is added to the image processing apparatus 130 of the third working example described hereinabove with reference to FIG. 12.

The reduced image generation section 121, the sampling point selection section 101, the correction function calculation section 102, the image correction section (correction function application section) 103, and the composite image generation section 131 that are the other components of the image processing apparatus 150 basically execute processes substantially similar to those of the third working example.

However, the correction function calculation section 102 executes a different process.

The image corresponding correction function storage section 151 stores a correction function of an image for which a calculation process of a correction function has been performed by the correction function calculation section 102.

Further, when the correction function calculation section 102 executes a correction function calculation process for a new image, it acquires correction function information of processed images around the processing target image, namely, of images for which a calculation process of a correction function has been performed by the correction function calculation section 102, from the image corresponding correction function storage section 151. The correction function calculation section 102 refers to the acquired information from the image corresponding correction function storage section 151 to execute a correction function calculation process for the new image.

A particular example is described with reference to FIG. 18.

At an upper left portion of FIG. 18, a composite image before correction is depicted. The composite image is configured from a plurality of images captured successively, for example, using a drown.

The images configuring the composite image are sequentially inputted to and processed by the image processing apparatus 150.

It is assumed that the processes are performed according to arrow marks depicted in FIG. 18.

On the right side in FIG. 18, five adjacent images that are part of images configuring the composite image are depicted.

They are an image Px for which the correction function calculation section 102 is to execute a correction function calculation process subsequently and images Pa to Pd for which a correction function calculation process is executed already among surrounding images of the image Px.

When the correction function calculation section 102 performs calculation of a correction function for the image Px for which a correction function calculation process is to be executed subsequently, it refers to the correction functions of the images Pa to Pd for which a correction function is calculated already, namely, for the surrounding images of the image Px.

A correction function calculation process for the image Px is performed utilizing a result of the reference.

For example, the correction function of the image Px is calculated by combining the correction functions of the five surrounding images depicted in FIG. 18. For example, such a process as $\alpha$ blending is executed to calculate a correction function of a new image on the basis of a plurality of correction functions of the surrounding images.

For example, such a process as $\alpha$ blending is executed with weights set such that an increasing weight is applied to a reference image at a shorter distance, and a correction function of a new image is calculated on the basis of a plurality of correction functions of surrounding images.

By performing such processes as described above, it is possible to omit or simplify the calculation processing step of a correction function involved in calculation of an approximate plane described hereinabove.

It is to be noted that preferably such processes are performed as to perform the calculation process of a correction function including calculation of an approximate plane described hereinabove without omitting them and refer, when such processes are performed, to correction function information of processed surrounding images to modify the correction function calculated on the basis of information of the surrounding images.

(5-3) (Working Example 6) Working example in which a calculation process of an approximate plane in a non-processed image is executed by referring to approximate plane information of surrounding images processed already

Now, as a working example 6, a working example in which a calculation process of an approximate plane in a non-processed image is executed by referring to approximate plane information of surrounding images processed already

FIG. 19 is a block diagram depicting an example of a configuration of an image processing apparatus 160 of the present working example 6. As depicted in FIG. 19, the image processing apparatus 160 includes a reduced image generation section 121, a sampling point selection section 101, a correction function calculation section 102, an image correction section (correction function application section) 103, a composite image generation section 131, and an image corresponding approximate plane storage section 161.

The image processing apparatus 160 depicted in FIG. 19 is configured such that the image corresponding approximate plane storage section 161 is added to the image processing apparatus 130 of the third working example described hereinabove with reference to FIG. 12.

The reduced image generation section 121, the sampling point selection section 101, the correction function calculation section 102, the image correction section (correction function application section) 103, and the composite image generation section 131 that are the other components of the image processing apparatus 160 basically execute processes substantially similar to those of the third working example.

However, the correction function calculation section 102 executes a different process.

The image corresponding approximate plane storage section 161 stores an approximate plane y(x) of an image for which a calculation process of the approximate plane y(x) has been performed by the correction function calculation section 102.

Further, when the correction function calculation section 102 executes a calculation process of an approximate plane y(x) for a new image, it acquires approximate plane y(x) information of processed images around the processing target image, namely, images for which the calculation of an approximate plane y(x) has been performed by the correction function calculation section 102, from the image corresponding approximate plane storage section 161. The correction function calculation section 102 refers to the acquisition information from the image corresponding approximate plane storage section 161 to execute an approximate plane y(x) calculation process for the new image.

A particular example is described with reference to FIG. 20.

At an upper left portion of FIG. 20, a composite image before correction is depicted. The composite image is configured from a plurality of images successively captured, for example, using a drone.

The images configuring the composite image are sequentially inputted to and processed by the image processing apparatus 160.

It is assumed that the processing is performed according to arrow marks depicted in FIG. 20.

On the right side in FIG. 20, five adjacent images that are part of images configuring the composite image are depicted.

They are an image Px for which the correction function calculation section 102 is to perform an approximate plane y(x) calculation process subsequently and images Pa to Pd for which an approximate plane y(x) calculation process has been performed already from among surrounding images of the image Px.

When the correction function calculation section 102 performs calculation of an approximate plane y(x) for the image Px for which the approximate plane y(x) calculation process is to be executed subsequently, it refers to approximate planes y(x) of the images Pa to Pd for which the approximate plane y(x) is calculated already, namely, for the surrounding images of the image Px.

The approximate plane y(x) calculation process for the image Px is performed utilizing a result of the reference.

For example, the approximate plane y(x) of the image Px is calculated by combining the approximate planes y(x) of the five surrounding images depicted in FIG. 20. For example, such a process as $\alpha$ blending is executed to calculate the approximate plane y(x) for the new image on the basis of the plurality of approximate planes y(x) of the surrounding images.

For example, such a process as $\alpha$ blending is executed with weights set such that an increasing weight is applied to a reference image at a shorter distance, and the approximate plane y(x) of the new image is calculated on the basis of a plurality of correction functions of surrounding images.

By performing such processes as described above, the calculation processing step of an approximate plane y(x) described above can be omitted or simplified.

It is to be noted that preferably a calculation processing process is performed without omitting the calculation process of an approximate plane y(x) described above and such a process is performed, when this process is performed, that the approximate plane y(x) information of processed surrounding images calculated on the basis of information of the surrounding images by referring to the approximate plane y(x) information of the processed surrounding images.

The following three working examples have been described with reference to FIGS. 14 to 20:

(Working Example 4) Working example in which a selection process of sampling points in a non-processed image is executed by referring to sampling point position information of surrounding images processed already

(Working Example 5) Working example in which a calculation process of a correction function for a non-processed image is executed by referring to correction function information of surrounding images processed already

(Working Example 6) Working example in which a calculation process of an approximate plane in a non-processed image is executed by referring to approximate plane information of surrounding images processed already

The working examples are configured such that, upon sampling point selection or in a correction function or an approximate plane calculation process, information of surrounding processed images is referred to.

Although the working examples 4 to 6 may be configured so as to be carried out individually, they may otherwise be configured so as to be carried out in combination. Various configurations are possible such as, for example, a configuration of combination of the working example 4 and the working example 5.

It is to be noted that, as a processing procedure in the case where a plurality of reference processes such as, for example, the working example 4 and the working example 5 is executed, any one of the following settings can be used.

(a) A procedure in which captured images are looped for each processing block of the sampling selection section and the correction function calculation section to perform processing sequentially (inner loop)

(b) A procedure in which processes of a processing block are looped for each image to perform processing sequentially (outer loop)

Further, although, at the time of start of processing, a processed surrounding image does not exist, as a processing mode in this case, for example, the following processes are possible:

(a) a process of recursively repeating a process that utilizes surrounding information using a value obtained by sampling without surrounding image information as an initial value; and

(b) a process of sequentially correcting captured images and calculating, when each of the images is corrected, a sampling point and a correction function utilizing only information processed already.

Further, the image to be utilized as a reference image is not limited to an image before correction but may be an image after correction. In other words, it is possible to use any one of the following processing modes.

(a) A method by which, from among captured images before correction, an image for which only a sampling point or a correction function is calculated is used as a reference image

(b) A method by which, from among images after correction, an image for which a sampling point and a correction function are calculated is used as a reference image

It is to be noted that, in the description of the examples of processing described hereinabove with reference to FIGS. 15, 18, and 20, an example is described in which surrounding images determined from a positional relation of a plurality of images configuring a single large composite image, namely, adjacent images, are used as reference images for a sampling point or a correction function.

In addition to the configuration that such positional adjacent images are used as reference images, for example, in the case where correction of a moving image is performed, images preceding to and succeeding an image frame that is a processing target (for example, N preceding and succeeding frames) can be used as reference images.

Further, as an example of particular processing in the case where sampling points are determined from among sampling points of surrounding images, for example, any one of the following methods can be applied.

(a) Pixels at the same pixel positions as those of sampling points (pixels) of surrounding images are selected at a fixed rate.

(b) A plurality of images including surrounding images is applied to perform clustering, semantic segmentation, a determination process of a sampling point extraction cluster, and a sampling point selection process.

Furthermore, as a method of utilizing information of an overlapping region of a surrounding image and a processing target image, the following methods are also possible.

(c) Sampling points are selected at a fixed rate from within an overlapping region (overall overlapping region of a surrounding image and a processing target image)

(d) In the case where signals of the overlapping region are replaced with signals of only one of the images, sampling points are selected at a fixed rate from only signals of the image for replacement described above from within the overlapping region.

Further, upon the correction function calculation process or the approximate plane calculation process, such a process as to re-calculate a correction function or an approximate plane using weighted averaging in which the closeness to a surrounding image is used as the weight may be performed.

[6. Example of Hardware Configuration of Image Processing Apparatus]

Now, an example of a hardware configuration of the image processing apparatus of the present disclosure is described. The hardware depicted in FIG. 21 is an example of a particular hardware configuration of the imaging processing apparatus of the working examples described hereinabove with reference to FIG. 1 and so forth.

A CPU (Central Processing Unit) 301 functions as a control section and a data processing section that execute various processes according to a program stored in a ROM (Read Only Memory) 302 or a storage section 308. For example, the CPU 301 executes processes according to the sequences described hereinabove in connection with the working examples. Into a RAM (Random Access Memory) 303, programs to be executed by the CPU 301, data, and so forth are stored. The CPU 301, the ROM 302, and the RAM 303 are connected to each other by a bus 304.

The CPU 301 is connected to an input/output interface 305 through the bus 304, and an inputting section 306 configured from various switches, a keyboard, a mouse, a microphone, sensors, and so forth and an outputting section 307 configured from a display, a speaker, and so forth are connected to the input/output interface 305.

The CPU 301 executes various processes according to an instruction inputted from the inputting section 306 and outputs a result of the processes, for example, to the outputting section 307.

The storage section 308 connected to the input/output interface 305 is configured, for example, from a hard disk or the like and stores programs to be executed by the CPU 301 and various data. A communication section 309 functions as a transmission and reception section for Wi-Fi communication, Bluetooth (registered trademark) (BT) communication, and other data communication through a network such as the Internet or a local area network and communicates with an external apparatus.

A drive 310 connected to the input/output interface 305 drives a removable medium 311 such as a magnetic disk, an optical disk, a magneto-optical disk, or a semiconductor memory such as a memory card and executes recording or reading of data.

[7. Summary of Configuration of Present Disclosure]

The working examples of the present disclosure have been described in detail with reference to specific working examples. However, it is self-evident that those skilled in the art can make amendment or substitution without departing from the subject matter of the present disclosure. In particular, the present invention has been disclosed in the form of exemplification and shall not be construed restrictively. In order to decide the subject matter of the present disclosure, the claims should be taken into consideration.

It is to be noted that the technology disclosed in the present specification can take the following configurations.

(1) An image processing apparatus including:

a sampling point selection section configured to select sampling points to be utilized for calculation of a correction function to be applied to pixel value correction of an image from within the image;
a correction function calculation section configured to apply a pixel value and positional information of each of the sampling points selected by the sampling point selection section to calculate the correction function; and
an image correction section configured to apply the correction function to perform pixel value correction of the image, in which
the sampling point selection section:

executes clustering for dividing component pixels of the image into a plurality of subsets,
determines a sampling point extraction cluster from among a plurality of clusters generated by the clustering, and
executes a process for selecting sampling points from within the sampling point extraction cluster.

(2) The image processing apparatus according to (1), in which
the sampling point selection section determines a sampling point extraction cluster by any one of the following methods (a) to (c):

(a) setting one or more clusters as a sampling point extraction cluster or sampling point extraction clusters in order beginning with a cluster having a maximum pixel number,
(b) setting either a cluster including pixels having pixel values whose mean value or median is the center of all clusters or several clusters adjacent to the cluster as a sampling point extraction cluster or sampling point extraction clusters, and
(c) setting a cluster selected by a user as a sampling point extraction cluster.

(3) The image processing apparatus according to (1), in which
the sampling point selection section determines a cluster that includes many imaging targets that are to be analysis targets in the images as a sampling point extraction cluster.
(4) The image processing apparatus according to any one of (1) to (3), in which
the correction function calculation section

calculates an approximate plane $y(x)$ that defines pixel values corresponding to pixel positions, and
generates a correction function that varies a correction amount in response to a ratio between the approximate plane $y(x)$ and a correction reference $Yref(x)$ prescribed in advance.

(5) The image processing apparatus according to (4), in which
the correction reference $Yref(x)$ is any one of a mean value or a median of pixel values of the sampling point extraction cluster and a user selected value.
(6) The image processing apparatus according to (4) or (5), in which
the correction function calculation section calculates the approximate plane $y(x)$ that defines the pixel values corresponding to the pixel positions using at least one of Kernel regression interpolation, spline surface interpolation, polynomial approximate curved surface, or linear interpolation.
(7) The image processing apparatus according to any one of (1) to (6), in which
the correction function calculation section

calculates an approximate plane $y(x)$ that defines pixel values corresponding to pixel positions, and
generates a correction function that varies a correction amount in response to a ratio between the approximate plane $y(x)$ and a correction reference $Yref(x)$ prescribed in advance, the correction function being:

$$Y'(x) = (Yref(x)/y(x))Y(x)$$

where

Y'(x) is a pixel value corresponding to a pixel position (x) after correction of the image, and
Y(x) is a pixel value corresponding to a pixel position (x) before the correction of the image.

(8) The image processing apparatus according to any one of (1) to (7), in which
the sampling point selection section executes the clustering by applying any one of the following methods (a) to (d) :

(a) K-Means method,
(b) K-NN method,
(c) Ward method, and
(d) semantic segmentation.

(9) The image processing apparatus according to any one of (1) to (8), in which
the sampling point selection section executes the clustering on the basis of specific feature information of pixels of the image.
(10) The image processing apparatus according to (9), in which the feature information includes luminance of the pixels of the image, at least one of RGB signals, or a signal on any one of a Lab space, a YUV space, and an xy chromaticity space.
(11) The image processing apparatus according to any one of (1) to (10), further comprising:

a reduced image generation section configured to reduce the image to generate a reduced image, in which the sampling point selection section and the correction function calculation section execute a process for a reduced image generated by the reduced image generation section.

(12) The image processing apparatus according to any one of (1) to (11), further comprising:
a composite image generation section configured to join corrected images generated by the image correction section to generate one composite image.
(13) The image processing apparatus according to (12), in which
the composite image generation section executes a process of making a mean value of pixel values of corrected images that become a joining target, a mean value of pixel values of an overlapping region of corrected images, or a mean value of pixel values of a sampling point extraction cluster coincide with a correction reference pixel value set in advance to generate a composite image in which discontinuity at joining portions is moderated.
(14) The image processing apparatus according to any one of (1) to (13), in which
the sampling point selection section receives, upon a sampling point selection process, sampling point selection information processed already as an input thereto from surrounding images of a processing target image and refers to the input information to execute the sampling point selection process of the processing target image.
(15) The image processing apparatus according to any one of (1) to (14), in which
the correction function calculation section receives, upon a correction function calculation process, correction function information calculated already as an input thereto from surrounding images of the processing target image and refers to the input information to execute the correction function calculation process of the processing target image.
(16) An image processing method executed by an image processing apparatus, including:

a sampling point selection step, by a sampling point selection section, of selecting sampling points to be utilized for calculation of a correction function to be applied to pixel value correction of an image from within the image;
a correction function calculation step, by a correction function calculation section, of applying a pixel value and positional information of each of the sampling points selected by the sampling point selection section to calculate the correction function; and
an image correction step, by an image correction section, of applying the correction function to perform pixel value correction of the image, in which
the sampling point selection step includes

a step of executing clustering for dividing component pixels of the image into a plurality of subsets,
a step of determining a sampling point extraction cluster from among a plurality of clusters generated by the clustering, and

a step of selecting sampling points from within the sampling point extraction cluster.

(17) A program for causing an image processing apparatus to execute an image process, the program including:

a sampling point selection step causing a sampling point selection section to select sampling points to be utilized for calculation of a correction function to be applied to pixel value correction of an image from within the image; a correction function calculation step causing a correction function calculation section to apply a pixel value and positional information of each of the sampling points selected by the sampling point selection section to calculate the correction function; and

an image correction step causing an image correction section to apply the correction function to perform pixel value correction of the image, in which the sampling point selection step includes

a step of executing clustering for dividing component pixels of the image into a plurality of subsets, a step of determining a sampling point extraction cluster from among a plurality of clusters generated by the clustering, and a step of selecting sampling points from within the sampling point extraction cluster.

Further, the series of processes described in the specification can be executed by hardware, by software, or by a composite configuration of them. In the case where the series of processes is executed by software, a program in which the processing sequence is recorded is installed into a memory of and executed by a computer incorporated in hardware for exclusive use, or the program can be installed into and executed by a computer for universal use that can execute various functions. For example, the program can be recorded in a recording medium in advance. The program can be installed from a recording medium into a computer and can be received through a network such as a LAN (Local Area Network) or the Internet and installed into a recording medium such as a built-in hard disk or the like.

It is to be noted that the various processes described in the specification may be executed in a chronological order according to the description and may be executed also in parallel or individually according to the processing capacity of an apparatus that executes the processing or as occasion demands. Further, in the present specification, the term "system" is used to signify a logical aggregation of a plurality of components and it is not limited to one in which a configuration of individual components is accommodated in the same housing.

[Industrial Applicability]

As described above, according to the configuration of one working example of the present disclosure, an image processing apparatus and an image processing method are implemented which can generate a corrected image of high picture quality in which luminance unevenness and color unevenness are reduced.

In particular, the image processing apparatus includes a sampling point selection section that selects, for example, sampling points to be utilized for calculation of a correction function to be applied to pixel value correction of an image from within the image, a correction function calculation section that applies a pixel value and positional information of each of the sampling points to calculate the correction function, and an image correction section that applies the correction function to perform pixel value correction of the image. The sampling point selection section executes clustering (cluster division) for dividing component pixels of the image into a plurality of subsets (clusters), determines a sampling point extraction cluster from among a plurality of clusters generated by the clustering, and executes a process for selecting sampling points from within the sampling point extraction cluster.

By the present configuration, an image processing apparatus and an image processing method are implemented which can generate a corrected image of high picture quality in which luminance unevenness and color unevenness are reduced.

[Reference Signs List]

10 Captured image
20 Corrected image
100 Image processing apparatus
101 Sampling point selection section
102 Correction function calculation section
103 Image correction section

120 Image processing apparatus
121 Reduced image generation section
130 Image processing apparatus
131 Composite image generation section
140 Image processing apparatus
141 Image corresponding sampling point position information storage section
150 Image processing apparatus
151 Image corresponding correction function storage section
160 Image processing apparatus
161 Image corresponding approximate plane storage section
301 CPU
302 ROM
303 RAM
304 Bus
305 Input/output interface
306 Inputting section
307 Outputting section
308 Storage section
309 Communication section
310 Drive
311 Removable medium

**Claims**

1. An image processing apparatus comprising:

   a sampling point selection section configured to select sampling points to be utilized for calculation of a correction function to be applied to pixel value correction of an image from within the image;
   a correction function calculation section configured to apply a pixel value and positional information of each of the sampling points selected by the sampling point selection section to calculate the correction function; and
   an image correction section configured to apply the correction function to perform pixel value correction of the image, wherein
   the sampling point selection section

   executes clustering for dividing component pixels of the image into a plurality of subsets,
   determines a sampling point extraction cluster from among a plurality of clusters generated by the clustering, and
   executes a process for selecting sampling points from within the sampling point extraction cluster.

2. The image processing apparatus according to claim 1, wherein
   the sampling point selection section determines a sampling point extraction cluster by any one of the following methods (a) to (c):

   (a) setting one or more clusters as a sampling point extraction cluster or sampling point extraction clusters in order beginning with a cluster having a maximum pixel number,
   (b) setting either a cluster including pixels having pixel values whose mean value or median is a center of all clusters or several clusters adjacent to the cluster as a sampling point extraction cluster or sampling point extraction clusters, and
   (c) setting a cluster selected by a user as a sampling point extraction cluster.

3. The image processing apparatus according to claim 1, wherein
   the sampling point selection section determines a cluster that includes many imaging targets that are to be analysis targets in the image as a sampling point extraction cluster.

4. The image processing apparatus according to claim 1, wherein
   the correction function calculation section

calculates an approximate plane y(x) that defines pixel values corresponding to pixel positions, and generates a correction function that varies a correction amount in response to a ratio between the approximate plane y(x) and a correction reference Yref(x) prescribed in advance.

5. The image processing apparatus according to claim 4, wherein
the correction reference Yref(x) is any one of a mean value or a median of pixel values of the sampling point extraction cluster and a user selected value.

6. The image processing apparatus according to claim 4, wherein
the correction function calculation section calculates the approximate plane y(x) that defines the pixel values corresponding to the pixel positions using at least one of Kernel regression interpolation, spline surface interpolation, polynomial approximate curved surface, or linear interpolation.

7. The image processing apparatus according to claim 1, wherein
the correction function calculation section

calculates an approximate plane y(x) that defines pixel values corresponding to pixel positions, and generates a correction function that varies a correction amount in response to a ratio between the approximate plane y(x) and a correction reference Yref(x) prescribed in advance, the correction function being:

$$Y'(x) = (Yref(x)/y(x))Y(x)$$

where

Y'(x) is a pixel value corresponding to a pixel position (x) after correction of the image, and
Y(x) is a pixel value corresponding to a pixel position (x) before the correction of the image.

8. The image processing apparatus according to claim 1, wherein
the sampling point selection section executes the clustering by applying any one of the following methods (a) to (d) :

(a) K-Means method,
(b) K-NN method,
(c) Ward method, and
(d) semantic segmentation.

9. The image processing apparatus according to claim 1, wherein
the sampling point selection section executes the clustering on a basis of specific feature information of pixels of the image.

10. The image processing apparatus according to claim 9, wherein
the feature information includes luminance of the pixels of the image, at least one of RGB signals, or a signal on any one of a Lab space, a YUV space, and an xy chromaticity space.

11. The image processing apparatus according to claim 1, further comprising:

a reduced image generation section configured to reduce the image to generate a reduced image, wherein the sampling point selection section and the correction function calculation section execute a process for a reduced image generated by the reduced image generation section.

12. The image processing apparatus according to claim 1, further comprising:
a composite image generation section configured to join corrected images generated by the image correction section to generate one composite image.

13. The image processing apparatus according to claim 12, wherein
the composite image generation section executes a process of making a mean value of pixel values of corrected images that become a joining target, a mean value of pixel values of an overlapping region of corrected images, or a mean value of pixel values of a sampling point extraction cluster coincide with a correction reference pixel value set in advance to generate a composite image in which discontinuity at joining portions is moderated.

14. The image processing apparatus according to claim 1, wherein
the sampling point selection section receives, upon a sampling point selection process, sampling point selection information processed already as an input thereto from surrounding images of a processing target image and refers to the input information to execute the sampling point selection process of the processing target image.

15. The image processing apparatus according to claim 1, wherein
the correction function calculation section receives, upon a correction function calculation process, correction function information calculated already as an input thereto from surrounding images of the processing target image and refers to the input information to execute the correction function calculation process of the processing target image.

16. An image processing method executed by an image processing apparatus, comprising:

a sampling point selection step, by a sampling point selection section, of selecting sampling points to be utilized for calculation of a correction function to be applied to pixel value correction of an image from within the image;
a correction function calculation step, by a correction function calculation section, of applying a pixel value and positional information of each of the sampling points selected by the sampling point selection section to calculate the correction function; and
an image correction step, by an image correction section, of applying the correction function to perform pixel value correction of the image, wherein
the sampling point selection step includes

a step of executing clustering for dividing component pixels of the image into a plurality of subsets,
a step of determining a sampling point extraction cluster from among a plurality of clusters generated by the clustering, and
a step of selecting sampling points from within the sampling point extraction cluster.

17. A program for causing an image processing apparatus to execute an image process, the program comprising:

a sampling point selection step causing a sampling point selection section to select sampling points to be utilized for calculation of a correction function to be applied to pixel value correction of an image from within the image;
a correction function calculation step causing a correction function calculation section to apply a pixel value and positional information of each of the sampling points selected by the sampling point selection section to calculate the correction function; and
an image correction step causing an image correction section to apply the correction function to perform pixel value correction of the image, wherein
the sampling point selection step includes

a step of executing clustering for dividing component pixels of the image into a plurality of subsets,
a step of determining a sampling point extraction cluster from among a plurality of clusters generated by the clustering, and
a step of selecting sampling points from within the sampling point extraction cluster.

# FIG.1

EP 3 859 657 A1

100 IMAGE PROCESSING APPARATUS

10
CAPTURED IMAGE

101
SAMPLING POINT SELECTION SECTION

102
CORRECTION FUNCTION CALCULATION SECTION

103
IMAGE CORRECTION SECTION (CORRECTION FUNCTION APPLICATION SECTION)

20
CORRECTED IMAGE

# FIG.2

(1) EXAMPLE IN WHICH K-Means METHOD (K AVERAGING METHOD) IS APPLIED TO PERFORM DIVISION INTO CLUSTERS OF CLUSTER NUMBER = 11 (K = 11)

EP 3 859 657 A1

# FIG.3

EP 3 859 657 A1

FIG.4

# FIG.5

F I G . 6

(1) CLUSTER DIVISION EXAMPLE 1

(2) CLUSTER DIVISION EXAMPLE 2

(3) CLUSTER DIVISION EXAMPLE 3

# FIG.7

**(1) CONVENTIONAL PROCESSING EXAMPLE**
**(EXECUTE SPATIALLY EQUAL SAMPLING POINT SELECTION)**

(A)

LUMINANCE

SAMPLING POINT

PIXEL POSITION-LUMINANCE CORRESPONDENCE CURVE (LUMINANCE VALUES BEFORE CORRECTION)

x1  PIXEL POSITION

(B)

LUMINANCE

PIXEL POSITION-LUMINANCE CORRESPONDENCE CURVE (PIXEL VALUES BEFORE CORRECTION)

APPROXIMATE PLANE $y(x)$

x1  PIXEL POSITION

(C)

LUMINANCE

PIXEL POSITION-LUMINANCE CORRESPONDENCE CURVE (PIXEL VALUES BEFORE CORRECTION)

APPROXIMATE PLANE $y(x)$

Yref(x)

PIXEL POSITION-LUMINANCE CORRESPONDENCE CURVE (LUMINANCE VALUES AFTER CORRECTION)

x1  PIXEL POSITION

**(2) PROCESSING EXAMPLE OF PRESENT DISCLOSURE**
**(EXECUTE SAMPLING POINT SELECTION BASED ON CLUSTERING RESULT)**

(A)

LUMINANCE

SAMPLING POINT NON-SELECTION REGION

PIXEL POSITION-LUMINANCE CORRESPONDENCE CURVE (LUMINANCE VALUES BEFORE CORRECTION)

SAMPLING POINT

x1  PIXEL POSITION

(B)

LUMINANCE

PIXEL POSITION-LUMINANCE CORRESPONDENCE CURVE (PIXEL VALUES BEFORE CORRECTION)

APPROXIMATE PLANE $y(x)$

x1  PIXEL POSITION

(C)

LUMINANCE

PIXEL POSITION-LUMINANCE CORRESPONDENCE CURVE (PIXEL VALUES BEFORE CORRECTION)

PIXEL POSITION-LUMINANCE CORRESPONDENCE CURVE (LUMINANCE VALUES AFTER CORRECTION)

Yref(x)

APPROXIMATE PLANE $y(x)$

x1  PIXEL POSITION

EP 3 859 657 A1

# FIG.8

(3) PROCESSING EXAMPLE OF PRESENT DISCLOSURE
(EXECUTE SAMPLING POINT SELECTION BASED ON CLUSTERING RESULT)

(A) LUMINANCE

SAMPLING POINT

PIXEL POSITION-LUMINANCE
CORRESPONDENCE CURVE (LUMINANCE
VALUES BEFORE CORRECTION)

SAMPLING POINT
SELECTION REGION

→ PIXEL POSITION

(B) LUMINANCE

PIXEL POSITION-LUMINANCE
CORRESPONDENCE CURVE (PIXEL
VALUES BEFORE CORRECTION)

APPROXIMATE PLANE $y(x)$

→ PIXEL POSITION

(C) LUMINANCE

PIXEL POSITION-LUMINANCE
CORRESPONDENCE CURVE (PIXEL
VALUES BEFORE CORRECTION)

PIXEL POSITION-LUMINANCE
CORRESPONDENCE CURVE (LUMINANCE
VALUES AFTER CORRECTION)

$Yref(x)$

$Yref(x)$

APPROXIMATE PLANE $y(x)$

→ PIXEL POSITION

EP 3 859 657 A1

# FIG.9

START

↓

**S101**

INPUT CAPTURED IMAGE

↓

**S102**

EXECUTE CLUSTERING OF CAPTURED IMAGE

↓

**S103**

SELECT SAMPLING POINTS FROM CAPTURED IMAGE

↓

**S104**

GENERATE CORRECTION FUNCTION UTILIZING PIXEL VALUE OF SAMPLING POINTS

↓

**S105**

CALCULATE CORRECTED PIXEL VALUES BY APPLYING CORRECTION FUNCTION TO PIXEL VALUES OF PIXELS OF CAPTURED IMAGE

↓

**S106**

GENERATE AND OUTPUT CORRECTION IMAGE CONFIGURED FROM CORRECTED PIXEL VALUES

↓

END

EP 3 859 657 A1

# FIG.10

EP 3 859 657 A1

120 IMAGE PROCESSING APPARATUS

10 CAPTURED IMAGE

121 REDUCED IMAGE GENERATION SECTION

101 SAMPLING POINT SELECTION SECTION

102 CORRECTION FUNCTION CALCULATION SECTION

103 IMAGE CORRECTION SECTION (CORRECTION FUNCTION APPLICATION SECTION)

20 CORRECTED IMAGE

# FIG.11

```
        ┌─────────┐
        │  START  │
        └────┬────┘
             │
             ▼  S201
┌────────────────────────────┐
│    INPUT CAPTURED IMAGE     │
└────────────┬───────────────┘
             │
             ▼  S202
┌────────────────────────────┐
│    GENERATE REDUCED IMAGE   │
│      OF CAPTURED IMAGE      │
└────────────┬───────────────┘
             │
             ▼  S203
┌────────────────────────────┐
│ EXECUTE CLUSTERING OF REDUCED IMAGE │
└────────────┬───────────────┘
             │
             ▼  S204
┌────────────────────────────┐
│    SELECT SAMPLING POINTS   │
│      FROM REDUCE IMAGE      │
└────────────────────────────┘
```

S205

GENERATE CORRECTION
FUNCTION UTILIZING PIXEL
VALUES OF SAMPLING POINTS

S206

CALCULATE CORRECTED PIXEL
VALUES BY APPLYING CORRECTION
FUNCTION TO PIXEL VALUES OF
PIXELS OF CAPTURED IMAGE

S207

GENERATE AND OUTPUT
CORRECTED IMAGE CONFIGURED
FROM CORRECTED PIXEL VALUES

END

EP 3 859 657 A1

# FIG.12

EP 3 859 657 A1

# FIG.13

START

**S301** SELECT PROCESSING TARGET IMAGE FROM PLURAL CAPTURED IMAGES

**S302** INPUT SELECTED CAPTURED IMAGE

**S303** GENERATE REDUCED IMAGE OF SELECTED CAPTURED IMAGE

**S304** EXECUTE CLUSTERING OF REDUCED IMAGE

**S305** SELECT SAMPLING POINTS FROM REDUCED IMAGE

**S306** GENERATE CORRECTION FUNCTION BY UTILIZING PIXEL VALUES OF SAMPLING POINTS

**S307** CALCULATE CORRECTED PIXEL VALUES BY APPLYING CORRECTION FUNCTION TO PIXEL VALUES OF PIXELS OF CAPTURED IMAGE

**S308** GENERATE AND OUTPUT CORRECTED IMAGE CONFIGURED FROM CORRECTED PIXEL VALUES

**S309** IS CORRECTION OF ALL CAPTURED IMAGES COMPLETED? — No

Yes

**S310** GENERATE COMPOSITE IMAGE BY CONNECTING ALL CORRECTED IMAGES AND OUTPUT COMPOSITE IMAGE

END

EP 3 859 657 A1

# F I G . 1 4

# FIG.15

IMAGES Pa TO Pd = SAMPLING POINT
SELECTION PROCESSED SURROUNDING IMAGES

IMAGE
CORRESPONDING
SAMPLING POINT

IMAGE Pa

IMAGE Pb

IMAGE Pc

IMAGE Pd

REGION a

SAMPLING POINT SELECTION
PROCESSING TARGET IMAGE Px

REGION b

# FIG.16

IMAGES Pa TO Pd = SAMPLING POINT
SELECTION PROCESSED SURROUNDING IMAGES

IMAGE
CORRESPONDING
SAMPLING POINT

IMAGE Pa

IMAGE Pb

IMAGE Pc

IMAGE Pd

SAMPLING POINT SELECTION
PROCESSING TARGET IMAGE Px

# FIG.17

150 IMAGE PROCESSING APPARATUS

P1

Pn

CAPTURED IMAGE 10

151

IMAGE CORRESPONDING CORRECTION FUNCTION STORAGE SECTION

121
REDUCED IMAGE GENERATION SECTION

101
SAMPLING POINT SELECTION SECTION

102
CORRECTION FUNCTION CALCULATION SECTION

103
IMAGE CORRECTION SECTION (CORRECTION FUNCTION APPLICATION SECTION)

20-1~n
CORRECTED IMAGE

131
COMPOSITE IMAGE GENERATION SECTION

30

COMPOSITE IMAGE

# FIG.18

IMAGES Pa TO Pd = CORRECTION FUNCTION
CALCULATED SURROUNDING IMAGES

IMAGE CORRESPONDING
CORRECTION FUNCTION

IMAGE Pa

IMAGE Pb

IMAGE Pc

OUTPUT $Y'a(x)$ INPUT

OUTPUT $Y'b(x)$ INPUT

OUTPUT $Y'c(x)$ INPUT

OUTPUT $Y'd(x)$ INPUT

IMAGE Pd

CORRECTION FUNCTION
CALCULATION TARGET IMAGE Px

EP 3 859 657 A1

# F I G . 1 9

160 IMAGE PROCESSING APPARATUS

# F I G . 2 0

IMAGES Pa TO Pd = APPROXIMATE PLANE
(y(x)) CALCULATED SURROUNDING IMAGES

IMAGE CORRESPONDING
APPROXIMATE PLANE

IMAGE Pa

IMAGE Pb

IMAGE Pc

PIXEL VALUE
(LUMINANCE
VALUE) $ya(x)$

x (PIXEL POSITION)

PIXEL VALUE
(LUMINANCE
VALUE) $yb(x)$

x (PIXEL POSITION)

PIXEL VALUE
(LUMINANCE
VALUE) $yc(x)$

x (PIXEL POSITION)

PIXEL VALUE
(LUMINANCE
VALUE) $yd(x)$

x (PIXEL POSITION)

IMAGE Pd

APPROXIMATE PLANE & CORRECTION
FUNCTION CALCULATION TARGET IMAGE Px

# FIG.21

CPU 301

ROM 302

RAM 303

304

INPUT/OUTPUT INTERFACE 305

INPUTTING SECTION 306

OUTPUTTING SECTION 307

STORAGE SECTION 308

COMMUNICATION SECTION 309

DRIVE 310

REMOVABLE MEDIUM 311

EP 3 859 657 A1

**EP 3 859 657 A1**

## INTERNATIONAL SEARCH REPORT

| | International application No. |
|---|---|
| | PCT/JP2019/034079 |

A.  CLASSIFICATION OF SUBJECT MATTER
Int.Cl.  G06T5/00(2006.01)i,      G06T7/11(2017.01)i,      G09G5/02(2006.01)i,
         H04N7/18(2006.01)i

According to International Patent Classification (IPC) or to both national classification and IPC

B.  FIELDS SEARCHED

Minimum documentation searched (classification system followed by classification symbols)
Int.Cl.  G06T5/00, G06T7/00-7/90, G09G5/02, H04N7/18

Documentation searched other than minimum documentation to the extent that such documents are included in the fields searched
        Published examined utility model applications of Japan        1922–1996
        Published unexamined utility model applications of Japan      1971–2019
        Registered utility model specifications of Japan              1996–2019
        Published registered utility model applications of Japan      1994–2019

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2012-256130 A (OMRON CORP.) 27 December 2012, entire text, all drawings & US 2014/0185931 A1, entire text, all drawings | 1–17 |
| A | JP 2017-157043 A (CANON INC.) 07 September 2017, entire text, all drawings (Family: none) | 1–17 |
| A | JP 2018-130595 A (TOPCON CORPORATION) 23 August 2018, entire text, all drawings (Family: none) | 1–17 |

☐  Further documents are listed in the continuation of Box C.          ☐  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>   07 November 2019 (07.11.2019) | Date of mailing of the international search report<br>   19 November 2019 (19.11.2019) |
|---|---|
| Name and mailing address of the ISA/<br>   Japan Patent Office<br>   3-4-3, Kasumigaseki, Chiyoda-ku,<br>   Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004139219 A

**Non-patent literature cited in the description**

- **MASAHARU ANDO.** Shading and color correction of endoscopic pictures. *Journal of Japan Gastroenterological Endoscopy Society,* 1989, vol. 31 (7), 1727-1741
- **P. KRAHENBUHL.** Efficient Inference in Fully Connected CRFs with Gaussian Edge Potentials. *NIPS'11 Proceedings of the 24th International Conference on Neural Information Processing Systems,* 2011
- **G. LIN.** Efficient Piecewise Training of Deep Structured Models for Semantic. *IEEE Conference on Computer Vision and Pattern Recognition (CVPR),* 2016
- **P. ISOLA.** Image-to-Image Translation with Conditional Adversarial Networks. *IEEE Conference on Computer Vision and Pattern Recognition (CVPR),* 2017